# EUROPÄISCHE PATENTSCHRIFT

(11) **EP 2 016 126 B1**
(45) Veröffentlichungstag und Bekanntmachung des Hinweises auf die Patenterteilung: **16.08.2017**
(21) Anmeldenummer: 07724282.4
(22) Anmeldetag: 17.04.2007
(51) Int. Cl.: C08K 13/08, C08L 83/04, A01N 25/10, C08F 2/44, A01N 25/34, C08G 77/12, C08G 77/20, C08G 77/00

(54) **ANTISEPTIKAHALTIGE SILIKONELASTOMERE**
ANTISEPTIC-CONTAINING SILICONE ELASTOMERS
ÉLASTOMÈRES AUX SILICONES RENFERMANT DES ANTISEPTIQUES

(30) Priorität: 28.04.2006 DE 102006020644
(43) Veröffentlichungstag der Anmeldung: 21.01.2009
(73) Patentinhaber: Bayer Healthcare LLC, Whippany, NJ 07981-1544 (US)
(72) Erfinder: LOHRMANN, Marc, 82211 Herrsching (DE); PUDLEINER, Heinz, 47800 Krefeld (DE); HYNER, Joachim, 40764 Langenfeld (DE)
(74) Vertreter: Weickmann & Weickmann PartmbB
(86) Internationale Anmeldenummer: PCT/EP2007/003344
(87) Internationale Veröffentlichungsnummer: WO 2007/124855

(56) Entgegenhaltungen:
- EP-A- 0 328 421
- EP-A- 0 640 661
- DE-A1-102004 054 040
- US-A- 4 230 686

## Beschreibung

Die Erfindung betrifft Zusammensetzungen enthaltend Silikonelastomere sowie Antiseptika in homogener Verteilung, Verfahren zu ihrer Herstellung und deren Verwendung in medizinischen Artikeln.

Medizinische Artikel aus Kunststoffen (z.B. Katheter) werden heute in einer Vielzahl von Anwendungen für diagnostische und therapeutische Zwecke verwendet. Zentrale venöse Katheter werden beispielsweise in der modernen Intensivtherapie bei invasiven Monitoring- bzw. Behandlungsstrategien, wie der kontinuierlichen Hämofiltration verwendet. Harnwegskatheter sind ein wesentlicher Bestandteil der modernen medizinischen Versorgung und sind unverzichtbar, beispielsweise bei der Behandlung von Harnabflussstörungen. Obwohl moderne medizinische Artikel die Therapierung von Intensivpatienten substantiell verbessert haben, ist ihre Applikation mit erheblichen Risiken verbunden. Die häufige Verwendung von Kunststoffartikeln, wie z.B. Kathetern hat zu einem dramatischen Anstieg von sogenannten polymer-assoziierten Infektionen geführt. Die Hauptverursacher von polymer-assoziierten Infektionen sind i.a. multiresistente, nosokomiale Pathogene, welche an der Kunststoffoberfläche des Artikels adhärieren und sie anschließend kolonisieren (Urogenitale Infektionen, Hrsg. A. Hofstetter, Springer 1999, 241 - 64).

Katheter-assoziierte Infektionen stellen heute eine wichtige Ursache bei der Morbidität und Mortalität von Patienten der Intensivstation dar. Neuere Studien belegen, dass 70 - 90 % der nosokomial erworbenen Harnwegsinfektionen mit einer Instrumentation (Katheterisierung) des Harntraktes assoziiert sind. Nach Einmalkatheterismus der Harnblase tritt beispielsweise bei 0,5 - 28 % der Patienten eine Bakteriurie auf. Die Inzidenz von Katheter assoziierten Harnwegsinfektionen ist dabei abhängig von der Liegedauer des Katheters sowie vom Alter, vom Geschlecht und vom Erkrankungszustand (Immunokompetenz) des Patienten *(*Urogenitale Infektionen, Hrsg. A. Hofstetter, Springer 1999, 241 - 64*).* Die Verwendung von Kathetern beinhaltet aber nicht nur ein hohes Infektionsrisiko für die Patienten, sondern verursacht auch hohe therapeutische Folgekosten. Givens und Wenzel konnten zeigen, dass nosokomiale Harnwegsinfektionen den postoperativen Aufenthalt eines Patienten durchschnittlich um 2,4 Tage erhöhen und entsprechende zusätzliche Kosten verursachen *(*J. Urol. 1980, 124: 646 - 48). Die Prävention von Katheter assoziierten Infektionen hat daher in der modernen Medizin sowohl aus medizinischen als auch aus ökonomischen Gründen höchste Priorität.

Neben traumatischen und thromboembolischen Komplikationen sind katheter-assoziierte Infektionen bis hin zur Sepsis ein gravierendes Problem beim Einsatz zentralvenöser Katheter in der Intensivmedizin.

Zahlreiche Studien haben ergeben, dass koagulase-negative Staphylococcen, der transiente Keim Staphylococcus aureus und verschiedene Candida Spezies die Hauptverursacher von katheter-assoziierten Infektionen sind. Diese ubiquitär auf der Haut vorhandenen Mikroorganismen durchdringen bei der Applikation des Katheters die physiologische Hautbarriere und gelangen so in den subkutanen Bereich und letztendlich in die Blutbahn. Die Adhäsion der Bakterien auf der Kunststoffoberfläche wird als essentieller Schritt bei der Pathogenese von Fremdkörperinfektionen betrachtet. Nach der Adhäsion der Hautkeime an der Polymeroberfläche beginnt die metabolisch aktive Proliferation der Bakterien mit der Besiedlung des Polymers. Damit einher geht die Produktion eines Biofilms durch bakterielle Exkretion von extrazellulärer Glykocalix. Der Biofilm unterstützt die Adhäsion der Erreger und schützt sie vor dem Angriff bestimmter Zellen des Immunsystems. Zudem bildet der Film eine für viele Antibiotika undurchdringliche Barriere. Nach verstärkter Proliferation der pathogenen Keime an der Polymeroberfläche, kann es schließlich zu einer septischen Bakteriämie kommen. Zur Therapie derartiger Infektionen ist eine Entfernung des infizierten Katheters nötig, da eine Chemotherapie mit Antibiotika unphysiologisch hohe Dosen verlangen würde.

Die Häufigkeit von bakteriell induzierten Infektionen bei zentralvenösen Kathetern liegt im Durchschnitt bei ca. 5 %. Insgesamt zeichnen zentralvenöse Katheter für ca. 90 % aller Sepsisfälle in der Intensivmedizin verantwortlich. Die Verwendung von zentralvenösen Kathetern beinhaltet daher nicht nur ein hohes Infektionsrisiko für die Patienten, sondern verursacht auch enorm hohe therapeutische Folgekosten (Nachbehandlung, verlängerte Verweilzeiten in der Klinik).

Durch prophylaktische Maßnahmen, wie z.B. hygienische Maßnahmen (Handling der Katheter, Schulung des Personals) oder routinemäßige endoluminale Antibiotikaapplikationen kann die Problematik bei Harnwegs- und zentralvenösen Kathetern nur teilweise gelöst werden.

Eine rationale Strategie zur Prävention von polymer-assoziierten Infektionen besteht in der Modifizierung der verwendeten polymeren Materialien. Ziel dieser Modifizierung muss die Hemmung der Bakterienadhäsion bzw. der Proliferation bereits adhärierter Bakterien sein, um somit kausal Fremdkörperinfektionen zu vermeiden. Dies kann z.B. durch Inkorporierung einer geeigneten antimikrobiell wirksamen Substanz in die Polymermatrix (z.B. Antibiotika) gelingen, vorausgesetzt, dass der eingearbeitete Wirkstoff auch aus der Polymermatrix in kontrollierter Art und Weise herausdiffundieren kann. Ein infektionsresistentes Material sollte somit folgende Eigenschaften besitzen:
1) Breites Wirkungsspektrum gegen die bei den entsprechenden katheter-assoziierten Infektionen relevanten Mikroorganismen, besonders Koagulase-negative Staphylococcen wie Staphylococcus aureus bei Zentralvenösen Kathetern und Enterokokken-, Proteus-, Klebsiella-, Enterobacter-Spezies bei Harnröhrenkathetern
2) Ausreichende Dauer der antimikrobiellen Wirkung, wobei Wirkdauern von länger als 30 Tagen gefordert werden
3) Schutz der inneren und äußeren Oberflächen der Materialien
4) Polymermodifikation darf weder die Biokompatibilität (Thrombogenität, Zytotoxizität) noch die mechanischen Eigenschaften (Zugfestigkeit, Modul, Härte) des Materials beeinträchtigen.

Methoden zur Herstellung antimikrobiell modifizierter Polymere für medizinische Anwendungen sind bereits bekannt.

Aus der EP A 0 696 604 gehen aliphatische thermoplastische Polyurethan-Harnstoffe hervor, die durch die Harnstoff-Gruppen hydrophil sind, aber die Bakterienadhäsion und Proliferation an der Katheteroberfläche nicht verhindern können. In den EP A 1 067 974, EP A 0 927 222, EP A 1 128 724 und EP A 1 128 723 werden antibakteriell wirksame thermoplastische Compounds beschrieben, in die durch Hochviskos-Verarbeitungstechniken die Wirkstoffe in ausreichend feiner und homogener Verteilung eingebracht werden. Wie Vergleichsversuche gezeigt haben, reichen die Scherkräfte im Extruder allerdings nicht aus, um die geforderte Verteilung der pulverförmigen Wirkstoffe in den Silikon-Festphasenkautschuken zu erreichen, die für die Herstellung von Katheterschläuchen eingesetzt werden.

Polymermaterialien für medizinische Anwendungen, die wirkstoffhaltige Beschichtungen aufweisen, werden auch in der EP A 328 421 erwähnt. Beschrieben werden Verfahren zur Herstellung der antimikrobiell wirksamen Beschichtungen sowie Methoden zur Applikation auf die Oberflächen von medizinischen Devices. Die Beschichtungen bestehen aus einer Polymermatrix, insbesondere aus Polyurethanen, Silikonen oder bioabbaubaren Polymeren, und einer antimikrobiell wirksamen Substanz, vorzugsweise einer synergistischen Kombination eines Silbersalzes (Silber-Sulfathiazin) mit Chlorhexidin oder einem Antibiotikum. In dieser Schrift werden Kombinationen von verschiedenen Polymeren, u.a. auch Silikonen, mit Antibiotika beschrieben. Auf die Schwierigkeiten bei der Einarbeitung von pulverförmigen Wirkstoffen in Silikon-Kautschuke wird aber nicht eingegangen. Das erfindungsgemäße Verfahren wird in dieser Schrift nicht beschrieben.

In der Europäischen Patenschrift EP A 0 688 564 werden wirkstoffhaltige Silikonelastomere beschrieben, deren Abgaberate durch die Vernetzungsdichte gesteuert werden kann. Die besondere Bedeutung der Teilchengröße von Wirkstoffen in Silikonelastomeren und wie man diese erreicht findet keine Erwähnung. Darüber hinaus wird die Freisetzung von Wirkstoffe unterstützenden Zusatzstoffen beschrieben, auf die in der vorliegenden Erfindung bewusst verzichtet wird.

In der US-Schrift 4 230 686 (Schöpflin et al) werden bei Raumtemperatur vernetzende (RTV) Silikonelastomere beschrieben, die nicht-ionische, lipophile Wirkstoffe enthalten. Entsprechend dieser Schrift (Spalte 5, Zeile 57 bis 59) sind solche Silikonelastomere als Wirkstoffträger mit langsamer Freisetzung nur für lipophile, nichtionische Wirkstoffe geeignet. Des weiteren wird in Spalte 7, Zeile 51 bis 60 beschrieben, dass die Wirkstoffe als trockene Pulver in die Silikonelastomere eingemischt werden. Die Teilchengröße soll dabei so gewählt werden, dass je wasserlöslicher der Wirkstoff ist, desto größer die eingemischten Teilchen (4 bis 400 µm) sein müssen.

Aufgabe der Erfindung war es, neue Silikonelastflmere bereitzustellen, die zur Herstellung von medizinischen Fonnkörpem für Kurzzeitimplantate, insbesondere Kathetern, geeignet sind, und für einen längeren Zeitraum (länger als 30 Tage) effizient eine Oberflächenbesiedlung durch Mikroorganismen verhindern.

Darüber hinaus war es Aufgabe der Erfindung, ein Verfahren bereitzustellen, dass die Einbringung von Wirkstoffen in feiner Verteilung in Silikonelastomere ermöglicht.

Überraschenderweise wurde nun gefunden, dass die erfindungsgemäßen Silikonelastomere, die Antiseptika, insbesondere solche ausgewählt aus der Gruppe der Bispyridinium-Alkane, der polymeren Amidobiguanide, der quartären Ammonium-Verbindungen, insbesondere Benzalkoniumchlorid, sowie Chlorhexidin, Taurolidin und Triclosan, mit sehr kleiner Teilchengröße (ca. 3 µm) enthalten, über mehrere Wochen eine sehr gute Wirksamkeit gegen bakterielle Besiedlung auf Katheteroberflächen bewirkten. Der Gegenstand der Erfindung ist definiert gemäß den beiliegenden Ansprüchen. Gegenstand der Erfindung sind weiterhin der Einsatz von Suspensionen zur Einmischung des Antiseptikums in die Silikonkautschukformulierung wobei in einer bevorzugten Variante das Suspensionsmedium in das Silikonelastomer chemisch einbaubar ist.

Die Erfindung betrifft weiterhin Formkörper, die durch Vernetzung der erfindungsgemäßen Silikonkautschukformulierungen hergestellt werden.

Gegenstand der Erfindung ist zudem die Verwendung der erfindungsgemäßen Silikonelastomere zur Herstellung von medizinischen Schläuchen, Harnblasenkatheter (Foley-Kathetern, intermittierende Katheter, suprapubische und transurethrale Katheter), Hämodialyse-Katheter, ein- und mehrlumige Zentralvenöse Katheter, Periphäre Katheter, Thermodilutionskatheter, Ballon-Katheter für die perkutane, transluminale Koronarangioplastie (PTCA).

Ein weiterer Gegenstand der Erfindung sind medizinische Geräte, insbesondere Katheter, herstellbar aus den erfindungsgemäßen Silikonelastomeren.

Ein weiterer Gegenstand der vorliegenden Erfindung ist eine Verfahren zur Herstellung der erfindungsgemäßen Silikonkautschuke umfassend die Bereitstellung einer nachfolgend beschriebenen Silikonkautschukformulierung und die Polymerisation der besagten Silikonkautschukformulierung. Die Silikonkautschukformulierung ist ein weiterer Gegenstand der vorliegenden Erfindung.

Die erfindungsgemäße Silikonkautschukformulierung umfaßt die folgenden Komponenten:
A) mindestens ein Polysiloxan der Formel (I)

   **R¹R²₂SiO-(SiR³R⁴O-)ₓSiR¹R²₂** **(I),**

   worin die Reste
   - R¹ und R²: jeweils gleich oder verschieden sein können, und jeweils für C₁-C₁₂-Alkyl, C₁-C₁₂-Fluoralkyl, und gegebenenfalls substituiertes Phenyl oder Naphthyl stehen,
   - R³ und R⁴: jeweils gleich oder verschieden sein können, ausdrücklich auch in jeder Wiederholungseinheit, und jeweils für C₁-C₁₂-Alkyl, C₁-C₁₂-Fluoralkyl und gegebenenfalls substituiertes Phenyl oder Naphthyl stehen, darüber hinaus auch für -OSiR²R³R, worin R die Fortsetzung der Siloxankette analog Formel (I) in der Verzweigung symbolisiert, so dass das Polymermolekül Verzweigungseinheiten der Formel SiO_{4/2} und R³SiO_{3/2} aufweisen kann,
   - R¹ und R³: darüber hinaus unabhängig voneinander auch für C₁-C₁₂-Alkenyl stehen, wobei das Polymer 0,0002 bis 3 Gew.-% Vinylgruppen enthält und das Molekül über mindestens zwei olefinisch ungesättigte Mehrfachbindungen verfügt,
   - x: für eine ganze Zahl von 2 bis 15000 steht und so variiert wird, dass die Viskosität des Polymeren von 0,1 bis 1.000 Pas bei 25°C reicht,
B) gegebenenfalls mindestens ein Füllstoff mit einer spezifischen Oberfläche zwischen 50 und 500 m²/g nach BET,
C) gegebenenfalls mindestens ein Füllstoff mit einer spezifischen Oberfläche unter 50 m²/g nach BET,
D) gegebenenfalls mindestens ein weiterer Hilfsstoff,
E) gegebenenfalls mindestens ein gesättigtes Hydrophobierungsmittel aus der Gruppe, bestehend aus Disilazanen, Siloxandiolen, Alkoxysilanen, Silylaminen, Silanolen, Acetoxysiloxanen, Acetoxysilanen, Chlorsilanen, Chlorsiloxanen und Alkoxysiloxanen,
F) gegebenenfalls mindestens ein ungesättigtes Hydrophobierungsmittel aus der Gruppe, bestehend aus mehrfach vinylsubstituierten Methyldisilazanen, und Methylsilanolen und Alkoxysilanen jeweils mit ungesättigten Resten aus der Gruppe, bestehend aus Alkenyl, Alkenylaryl, Acryl und Methacryl,
G) gegebenenfalls mindestens ein nicht funktionelles Polysiloxan,
H) gegebenenfalls mindestens ein Inhibitor für die Hydrosilylierungsreaktion,
I) mindestens ein Polyhydrogensiloxan der Formel (II)

   **R²¹R²²₂SiO-(SiR²³R²⁴O-)ₓSiR²¹R²²₂** **(II),**

   worin die Substituenten
   - R²¹ und R²²: jeweils gleich oder verschieden sein können, und jeweils für C₁-C₁₂-Alkyl, C₁-C₁₂-Fluoralkyl, und gegebenenfalls substituiertes Phenyl oder Naphthyl stehen,
   - R²³: jeweils ausdrücklich auch in jeder Wiederholungseinheit unabhängig voneinander für Wasserstoff, C₁-C₁₂-Alkyl, C₁-C₁₂-Fluoralkyl und gegebenenfalls substituiertes Phenyl oder Naphthyl steht, darüber hinaus auch für -OSiR²³R²⁴R, worin R die Fortsetzung der Siloxankette analog Formel (II) in der Verzweigung symbolisiert, so dass das Polymermolekül Verzweigungseinheiten der Formel SiO_{4/2} und R²³SiO_{3/2} aufweisen kann, wobei R²³ in mindestens 4 dieser Silyldioxyleinheiten für Wasserstoff steht, so dass ein Molekül über mindestens 4 Vernetzungsstellen verfügt,
   - R²⁴: jeweils ausdrücklich auch in jeder Wiederholungseinheit unabhängig voneinander für C₁-C₁₂-Alkyl, C₁-C₁₂-Fluoralkyl und gegebenenfalls substituiertes Phenyl oder Naphthyl steht, darüber hinaus auch für -OSiR²³R²⁴R, worin R die Fortsetzung der Siloxankette analog Formel (II) in der Verzweigung symbolisiert, so dass das Polymermolekül Verzweigungseinheiten der Formel SiO_{4/2} und R²³SiO_{3/2} aufweisen kann,
   - x: für eine ganze Zahl von 4 bis 10000 steht und so variiert wird, dass die Viskosität des Polymeren von von 0,0005 bis 0,1 Pas bei 25°C reicht,
J) mindestens ein Katalysator enthaltend ein Element der Platingruppe,
   wobei maximal 3 Gewichtsteile Metallverbindungen, wie Oxide und/oder Carbonate sowie weiterer Salze und Komplexverbindungen des Fe, Al, Zn, Ti, Zr, Ce oder anderer Lanthanoide bezogen auf 100 Gewichtsteile der Komponente A) vorhanden sind,
K) mindestens eine Suspension, wobei das Suspensionsmedium Polysiloxane der Formel (I) und /oder (II) und/oder nicht funktionelle Siloxane G) sind und mindestens ein Antiseptikum ausgewählt aus der Gruppe bestehend aus Chlorhexidin, Octenidin, PHMB, Quats und Taurolidin enthält.

### Bispyridinium-alkane

Als Wirkstoffe kommen grundsätzlich alle die in der DE 27 08 331 C2 in den Patentansprüchen 1 bis 4 auf S. 28 definierten Wirkstoffe in Frage. Bevorzugt werden die Verbindungen aus den Beispielen 1-82 (S. 5 bis S. 18 Z. 19), besonders bevorzugt wird Octenidin, sein Hydrochlorid oder ganz besonders bevorzugt das Dihydrochlorid 1,1'-(1,10-Decandiyl)bis[4-(octylamino)-pyridinium]-dichlorid eingesetzt.

Diese als Bis-[4-(substituierten-amino)-1-pyridinium)-alkane bezeichneten Wirkstoffe sind durch die allgemeinen Formeln (III) und (IV) definiert 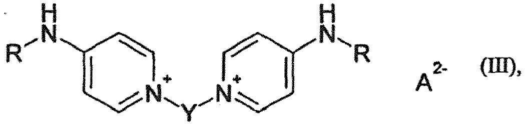 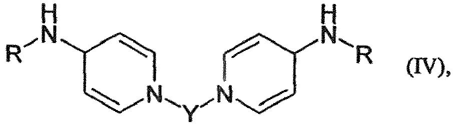 in welchen
- Y: für eine Alkylengruppe mit 4 bis 18 Kohlenstoffatomen steht,
- R: für C₆-C₁₈-Alkyl, C₅-C₇-Cycloalkyl oder durch ein Halogenatom substituiertes Phenyl steht und
- A: für zwei einwertige oder ein zweiwertiges Anion steht.
- Y: steht bevorzugt für 1,10-Decylen oder 1,12-Dodecylen, besonders bevorzugt für 1,12-Dodecylen.
- R: steht bevorzugt für n-Hexyl, n-Heptyl oder n-Octyl, besonders bevorzugt für n-Octyl.
- A: steht beispielsweise für ein Sulfat-, je 2 Fluorid-, Chlorid-, Bromid-, Jodid-, oder Methan-sulfonat-Ionen, bevorzugt für je 2 Fluorid-, Chlorid-, Bromid-, besonders bevorzugt für 2 Chlorid-Ionen.

Die Formel (IV) bezeichnet die korrespondierenden freien Basen, welche durch Neutralisation aus den Salzen der Formel (III) nach den üblichen Methoden der organischen Chemie hergestellt werden können. Die Salze der Formel (III) werden in der Literatur häufig auch in Form der Formel (V)

Formel (IV) x H₂A (V),

worin "Formel (IV)" und A die oben angegebenen Bedeutungen haben, dargestellt. Naturgemäß ist eine chemische Formel nur eine vereinfachte Darstellung der Realität. In diesem Falle sind es Tautomere, für die es keinen Anhaltspunkt gibt, dass diese unter gebräuchlichen Bedingungen und Temperaturen unterscheidbar sind. Für Octenidin-dihydrochlorid gibt es dennoch je 2 Chemical Abstracts Registry Nummern und 2 Nummern im Europäischen Altstoffinventar. Für die Erfindung soll es nicht relevant sein, ob Verbindungen der Formel (III) oder der Formel (V) eingesetzt werden oder in welcher Form diese in der Polymerzusammensetzung vorliegen. Bevorzugt werden Salze der Formel (III) bzw. (V) eingesetzt.

### Polymere Amidobiguanid

Die erfindungsgemäss zu verwendenden Aminopropylbiguanide weisen insbesondere die Formel VI auf, 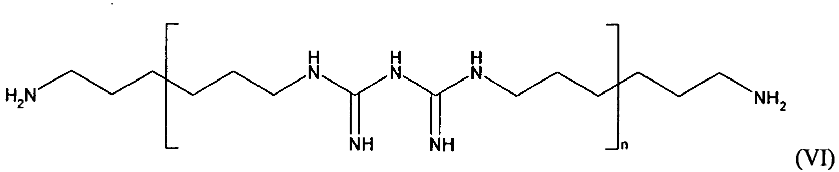 worin n eine ganze Zahl zwischen 1 und 500 bedeutet, ferner können auch Salze von Verbindungen der Formel VI verwendet werden, insbesondere die Salze davon.

Die Verbindungen der Formel VI sind bekannt. Ihre Herstellung ist z.B. in den GB 702,268 und GB 1,152,243 beschrieben. Darüberhinaus sind diese Verbindungen auch im Handel erhältlich, z.B. als Vantocil™, Cosmocil™ oder als Arlagard™ E von ICI Chemicals.

Die Verbindungen der Formel VI können, je nach ihrer Herstellungsweise gewisse Anteile eines Nebenproduktes der Formel VII enthalten, 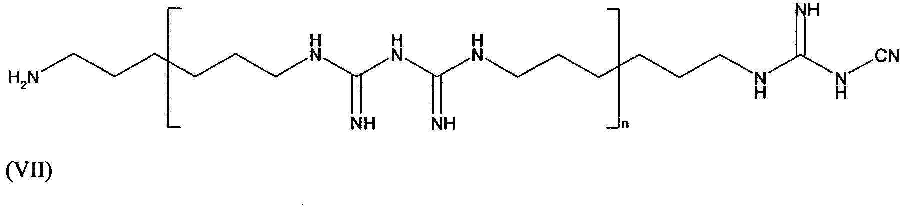 oder Salze davon, worin ebenfalls n eine ganze Zahl zwischen 1 und 500 bedeutet. Gemische von Verbindungen der Formel VI mit solchen der Formel VII können erfindungsgemäss ebenfalls verwendet werden. Der Anteil von Verbindungen der Formel VII, bezogen auf die Gesamtmenge von Verbindungen der Formel VI und Verbindungen der Formel VII, liegt vorzugsweise bei weniger als 20 Gewichtsprozent, stärker bevorzugt bei weniger als 2 bis 10 Gewichtsprozent und beträgt besonders bevorzugt Null Gewichtsprozent.

Der Index n in den Formeln VI respektive VII bedeutet vorzugsweise 1 bis 200, insbesondere 2 bis 100, besonders bevorzugt 2 bis 50 und ganz besonders bevorzugt 3 bis 12. Je nach Bedeutung des Index n in den Formeln VI oder VII liegt das Molekulargewicht der verwendbaren Aminopropylbiguanide so niedrig wie dasjenige Molekulargewicht des Monomeren der Formel VI (n = 1), oder im Bereich von etwa 600 bis 1600, falls Oligomere verwendet werden, d.h. wenn n beispielsweise für 3 bis 8 steht, oder auch im Bereich von etwa 50 000 bis etwa 90 000, falls n für deutliche höhere Werte steht, z.B. für etwa 270 bis 500.

Geeignete Salze sind solche mit anorganischen oder organischen Säuren, beispielsweise Hydrochloride, Hydrobromide, Borate, Acetate, Gluconate, Sulfonate, Maleate, Ascorbate, Tartrate oder Citrate.

Die Antiseptika werden vorzugsweise in einer ihrer antimikrobiellen Aktivität entsprechenden Konzentration in die erfindungsgemäßen Silikonkautschukformulierungen eingearbeitet. Die Antiseptika werden üblicherweise in einem Konzentrationsbereich von 0,01 bis 10,0 Gew.-%, bevorzugt 0,05 bis 5 Gew.-%, besonders bevorzugt 0,1 bis 5 Gew.-% in den Silikonelastomeren verwendet.

Im Rahmen der vorliegenden Erfindung ist die Komponente A) durch mindestens ein lineares oder verzweigtes Polysiloxan der gemäß der weiter oben angegebenen allgemeinen Formel (I) definiert.

**R¹R²₂SiO-(SiR³R⁴O-)ₓSiR¹R²₂** **(I),**

- R¹ und R²: können jeweils gleich oder verschieden sein, und stehen jeweils bevorzugt für C₁-C₁₂-Alkyl, C₁-C₁₂-Fluoralkyl, und gegebenenfalls ein oder mehrfach mit F, Cl, CF₃, C₁-C₆-Alkyl, C₁-C₆-Alkoxy, C₃-C₇-Cycloalkyl, C₂-C₆-Alkenyl oder Phenyl substituiertes Phenyl oder Naphthyl.
- R³ und R⁴: können jeweils gleich oder verschieden sein, ausdrücklich auch in jeder Wiederholungseinheit, und stehen jeweils bevorzugt für C₁-C₁₂-Alkyl, C₁-C₁₂-Fluoralkyl und gegebenenfalls ein oder mehrfach mit F, Cl, CF₃, C₁-C₆-Alkyl, C₁-C₆-Alkoxy, C₃-C₇-Cycloalkyl, C₂-C₆-Alkenyl oder Phenyl substituierte substituiertes Phenyl oder Naphthyl.
- R¹ und R³: stehen bevorzugt darüber hinaus unabhängig voneinander auch für C₁-C₁₂-Alkenyl, wobei das Polymer 0,0002 bis 3 Gew.-% Vinylgruppen enthält und jedes Molekül über mindestens zwei olefinisch ungesättigte Mehrfachbindungen verfügt.
- x: steht bevorzugt für eine ganze Zahl von 2 bis 15000 und wird so variiert, dass die Viskosität des Polymeren von 0,1 bis 1.000 Pas bei 25°C reicht.
- R² bis R⁴: stehen besonders bevorzugt für C₁-C₁₂-Alkyl.
- R¹: steht besonders bevorzugt für Vinyl.
- R² bis R⁴: stehen ganz besonders bevorzugt für Methyl.

Die Viskosität von Komponente A) beträgt vorzugsweise zwischen 0,1 und 30.000 Pa s.

Im Rahmen der vorliegenden Erfindung hat die Komponente B) die Bedeutung eines Füllstoffes mit einer spezifischen Oberfläche zwischen 50 und 500 m²/g nach BET. Dabei handelt es sich zweckmäßig um verstärkende Füllstoffe. Verstärkend bedeutet dabei, dass die mechanischen Festigkeitseigenschaften verbessert, insbesondere die Zugfestigkeit, Weiterreißfestigkeit, etc. verbessert werden. Die verstärkenden Füllstoffe werden zweckmäßiger Weise in einer Form zugesetzt, welche die elektrischen Eigenschaften der ausgehärteten erfindungsgemäßen Mischungen positiv beeinflusst bzw. zumindest nicht verschlechtert. Dies wird z.B. durch den Zusatz von gefällter oder pyrogener, bevorzugt pyrogener, Kieselsäure mit einer BET-Oberfläche von 50 bis 500 m²/g erreicht (Die BET-Oberfläche wird bestimmt nach S. Brunauer, P H. Emmett, E. Teller, J. Am. Soc. 60,309 (1938*)*)*.*

Bei den Füllstoffen kann es sich um hydrophobe oder hydrophile Füllstoffe handeln. Die Füllstoffe B) können oberflächenmodifiziert, d.h. hydrophobiert, sein, z.B. mit siliciumorganischen Verbindungen. Die Modifizierung kann vor oder auch während der Compoundierung zur erfindungsgemäßen Silikonkautschukformulierung erfolgen.

Bevorzugt erfolgt die Hydrophobierung mit den Komponenten E) und/oder F) gegebenenfalls unter Zusatz von Wasser. Bevorzugt erfolgt die Hydrophobierung mit gesättigten oder ungesättigten Disilazanen und Methylsilanolen, die ggf. auch aus den Disilazanen erzeugt werden können, gemäß der Definition der Komponenten E) oder F).

Vorzugsbereiche der BET-Oberfläche des Füllstoffes B) sind 50 bis 400, besonders bevorzugt 150 bis 300 m²/g. Die Menge der Komponente B) beträgt zweckmäßig zwischen 0 und 75 Gewichtsteile pro 100 Gewichtsteile der Komponente A), bevorzugt 20 bis 50 Gewichtsteile.

Im Rahmen der vorliegenden Erfindung ist die Komponente C) ein Füllstoff mit einer spezifischen Oberfläche unter 50, bevorzugt unter 40 noch bevorzugter unter 30 m²/g nach BET. Zweckmäßig handelt es sich um sogenannte "nicht verstärkende Füllstoffe", die die mechanischen Eigenschaften, insbesondere die Zugfestigkeit, Weiterreißfestigkeit, etc. nicht verbessern. Bevorzugt handelt es sich um Diatomeenerden, feinteilige Quarz-bzw. Cristobalitmehle, andere amorphe Kieselsäuren oder Silikate. Die Menge der Komponente C) beträgt zweckmäßig zwischen 0 und 300 Gewichtsteile pro 100 Gewichtsteile der Komponente A), bevorzugt 0 bis 50 Gewichtsteile.

Im Rahmen der vorliegenden Erfindung schließt der Begriff "Hilfsstoff" gemäß Komponente D) zweckmäßig Pigmente, Trennmittel, Extrusionshilfsmittel sowie Heißluftstabilisatoren, d.h. Stabilisatoren gegen Heißluftalterung ein. Zweckmäßig werden die Trennmittel aus der Gruppe von Formtrennmitteln wie z.B. Stearylderivaten oder Wachsen, Metallsalzen der Fettsäuren ausgewählt. Extrusionsmittel sind z.B. Borsäure oder PTFE-Pasten. Heißstabilisatoren sind z.B. Metallverbindungen, wie Oxide und/oder Carbonate sowie weitere Salze und Komplexverbindungen des Fe, Al, Zn, Ti, Zr, Ce oder anderer Lanthanoide und Antioxidationsmittel. Die Menge der Komponente D) beträgt zweckmäßig zwischen 0 und 10 Gewichtsteile pro 100 Gewichtsteile der Komponente A), wobei die Anwesenheit von mehr als 3 Gewichtsteilen, bevorzugt mehr als 2 Gewichtsteilen Metallverbindungen, wie Oxide und/oder Carbonate sowie weiterer Salze und Komplexverbindungen des Fe, Al, Zn, Ti, Zr, Ce oder anderer Lanthanoide ausgenommen sind.

Bevorzugt enthält die erfindungsgemäße Silikonkautschukformulierung keine Metallverbindungen, wie Oxide und/oder Carbonate sowie keine weitereren Salze und Komplexverbindungen des Fe, Al, Zn, Ti, Zr, Ce oder anderer Lanthanoide.

Im Rahmen der vorliegenden Erfindung ist die Komponente E) ein gesättigtes Hydrophobierungsmittel aus der Gruppe bestehend aus Disilazanen, Siloxandiolen, Alkoxysilanen, Silylaminen, Silanolen, Acetoxysiloxanen, Acetoxysilanen, Chlorsilanen, Chlorsiloxanen und Alkoxysiloxanen. Die Komponente E) dient dazu, die Füllstoffe C) und bevorzugt B) zu hydrophobieren. Die Hydrophobierung kann dabei vor der Compoundierung separat erfolgen oder während der Compoundierung in-situ. Die Menge der Komponente E) beträgt zweckmäßig, bezogen auf 100 Gewichtsteile B), 0 bis 30 Gewichtsteile, bevorzugt 2 bis 25.

Im Rahmen der vorliegenden Erfindung ist die Komponente F) ein ungesättigtes Hydrophobierungsmittel aus der Gruppe, bestehend aus mehrfach Vinyl-substituierten Methyldisilazanen, und Methylsilanolen und Alkoxysilanen jeweils mit ungesättigten Resten aus der Gruppe, bestehend aus Alkenyl, Alkenylaryl, Acryl und Methacryl. Die Komponente F) dient ebenfalls dazu, die Füllstoffe B) und C) zu hydrophobieren. Die Menge der Komponente F) beträgt zweckmäßig, bezogen auf 100 Gewichtsteile A), 0 bis 2 Gewichtsteile, bevorzugt 0,01 bis 1.

Die Gesamtmenge der Komponenten E) und F) bezogen auf die Gesamtmenge der Komponenten B) und C), bevorzugt bezogen auf B), beträgt bevorzugt 5-25 Gew.-%.

Im Rahmen der vorliegenden Erfindung versteht man unter dem Begriff "nicht funktionelle Polysiloxane" gemäß der Komponente G) zweckmäßig niedermolekulare, im Sinne der Hydrosilylierungsreaktion, nicht funktionelle, nicht vernetzbare, vorzugsweise trimethylsilyl-endgestoppte Polysiloxane mit Dimethyl-, Diphenyl oder Phenylsilyloxy-Gruppen mit Polymerisationsgraden von 4-1000, die nach der Vernetzung zum Formkörper die Oberfläche der Isolatoren zuverlässig hydrophobieren, wie z.B. in EP A 0 057 098 beschrieben. Die Menge der Komponente G) beträgt zweckmäßig, bezogen auf 100 Gewichtsteile A), 0 bis 15, bevorzugt 1 bis 3 Gewichtsteile.

Im Rahmen der vorliegenden Erfindung umfaßt der Begriff "Inhibitor für die Hydrosilylierungsreaktion" gemäß der Komponente H) alle nach dem Stand der Technik bekannten Inhibitoren für die Hydrosilylierungsreaktion mit Metallen der Pt-Gruppe, wie z.B. Maleinsäure und ihre Derivate, Amine, Azole, Alkylisocyanurate Phosphine, Phosphite und acetylenisch ungesättigte Alkohole, worin die OH-Gruppe an ein der C-C-Dreifachbindung benachbartes Kohlenstoffatom gebunden ist, wie sie z.B. in US 3 445 420 näher beschrieben sind. Vorzugsweise handelt es sich bei der Komponente G) um 2-Methyl-3-butin-2-ol oder 1- Ethinylcyclohexanol oder (±) 3-Phenyl-1-butin-3-ol. Die Komponente H) wird vorzugsweise in einem Mengenanteil von 0 bis 1 Gewichtsteile bezogen auf 100 Gewichtsteile der Summe A) bis I) verwendet. Vorzugsweise ist die Komponente H) in einem Mengenanteil von 0,0001% bis 2 Gew.- %, besonders bevorzugt 0,01 Gew.- % bis 2 Gew.- % und ganz besonders bevorzugt 0,05 Gew.- % bis 0,5 Gew.- %, jeweils bezogen auf das Gesamtgewicht der Mischung, enthalten.

Im Rahmen der vorliegenden Erfindung ist die Komponente I) durch mindestens ein Polyhydrogensiloxan, das über mindestens zwei direkt an verschiedene Siliciumatome gebundene Wasserstoffatome verfügt, gemäß der weiter oben angegebenen allgemeinen Formel (II) definiert. Darin gelten die folgenden Restedefinitionen:

**R²¹R²²₂SiO-(SiR²³R²⁴O-)ₓSiR²¹R²²₂** **(II),**

- R²¹ und R²²: können jeweils gleich oder verschieden sein, und stehen bevorzugt jeweils für C₁-C₁₂-Alkyl, C₁-C₁₂-Fluoralkyl, und gegebenenfalls substituiertes Phenyl oder Naphthyl.
- R²³: steht bevorzugt jeweils ausdrücklich auch in jeder Wiederholungseinheit unabhängig voneinander für Wasserstoff, C₁-C₁₂-Alkyl, C₁-C₁₂-Fluoralkyl und gegebenenfalls substituiertes Phenyl oder Naphthyl, wobei R²³ in mindestens 4 dieser Silyldioxyleinheiten für Wasserstoff steht, so dass ein Molekül über mindestens 4 Vernetzungsstellen verfügt.
- R²⁴: steht bevorzugt jeweils ausdrücklich auch in jeder Wiederholungseinheit unabhängig voneinander für C₁-C₁₂-Alkyl, C₁-C₁₂-Fluoralkyl und gegebenenfalls substituiertes Phenyl oder Naphthyl.
- x: steht bevorzugt für eine ganze Zahl von 4 bis 10000 und wird so variiert, dass die Viskosität des Polymeren von 0,0005 bis 0,1 Pas bei 25°C reicht.

In der Komponente I) liegt vorzugsweise der molare Anteil von direkt an ein Siliciumatom gebundenen Wasserstoffatomen zwischen 0,01 und 10 mmol/g, besonders bevorzugt zwischen 0,5 und 9 mmol/g und ganz besonders bevorzugt zwischen 1 und 7 mmol/g.

Die Menge der Komponente I) ist bevorzugt 0,2 bis 30, bevorzugt 0,2 bis 20 Gewichtsteile bezogen auf 100 Gewichtsteile der Komponente A).

Die Komponente J) steht für einen Katalysator, mindestens enthaltend ein Element der Platingruppe.

Bevorzugt ist die Komponente J) ein Katalysator, der die Hydrosilylierungsreaktion katalysiert und ausgewählt wird aus Metallen der Platingruppe, wie Pt, Ni und Verbindungen von Metallen der Platingruppe, wie Salze oder Komplexverbindungen davon. Weiterhin bevorzugt ist die Komponente J) ein Katalysator, enthaltend ein Element aus der Platingruppe, ausgewählt aus Platin und Platinverbindungen, die gegebenenfalls auf einen Träger aufgezogen sein können, sowie anderen Verbindungen von Elementen der Platingruppe. Platin und Platinverbindungen sind am meisten bevorzugt. So werden bevorzugt Pt-Salze, Pt- Komplexverbindungen mit Stickstoff, Phosphor-und/oder Alkenverbindungen oder Pt-Metall auf Trägern eingesetzt. Bevorzugt sind sämtliche Pt(0)- und Pt(II)-Verbindungen, bevorzugt sind Pt-Olefinkomplexe und Pt-Vinylsiloxankomplexe. Besonders bevorzugt sind Pt-Vinylsiloxankomplexe, Pt-Vinyldi- und tetrasiloxankomplexe, die vorzugsweise im Siloxan über mindestens 2 oder 4 olefinisch ungesättigte Doppelbindungen verfügen (siehe z.B. US 3 715 334). Unter den Begriff Siloxan fallen in diesem Zusammenhang auch Polysiloxane oder auch Polyvinylsiloxane.

Darüberhinaus kann Komponente J) auch ein Umsetzungsprodukt aus reaktiven Platinverbindungen mit den Inhibitoren H) sein.

Die Menge der Komponente J) in der erfmdungsgemäßen Formulierung beträgt bevorzugt, bezogen auf die Gesamtmenge der Komponenten A) bis I), 10 bis 100 ppm, bevorzugt 15 bis 80 ppm und ganz besonders bevorzugt 20 bis 50 ppm berechnet auf das Metall der Platingruppe in der Komponente J). Bevorzugt enthält die Silikonkautschukformulierungen 20-100 ppm Pt, bezogen auf die Menge der Komponenten A) bis J), in Form von Pt-Salzen, Pt- Komplexverbindungen mit Stickstoff-, Phosphor- und/oder Alkenverbindungen oder Pt-Metall auf Trägern.

Die Wirkstoff-Suspension K) besteht zum einen bevorzugt aus Polysiloxanen der weiter oben angegebenen Formel (I) als Suspensionsmittel. Darin gelten die folgenden Restedefinitionen

**R¹R²₂SiO-(SiR³R⁴O-)ₓSiR¹R²₂** **(I),**

- R¹ bis R⁴: stehen unabhängig voneinander besonders bevorzugt jeweils für Methyl und Vinyl, wobei das Polymer 0,0002 bis 3 Gew.-% Vinylgruppen enthält und jedes Molekül über mindestens zwei olefinisch ungesättigte Mehrfachbindungen verfügt.
- x: wird besonders bevorzugt so variiert, dass die Viskosität des Polymeren von 0,1 bis 1.000 Pas bei 25°C reicht.

Die Suspension K) enthält zum anderen mindestens ein Antiseptikum ausgewählt aus der Gruppe der Bispyridinium-Alkane, der polymeren Amidobiguanide, der quartären Ammonium-Verbindungen, insbesondere Benzalkoniumchlorid, sowie Chlorhexidin, Taurolidin und Triclosan dispergiert in einer mittleren Teilchengröße d₅₀ von 0,5 bis 15 µm, bevorzugt zwischen 1 und 10 µm, und einer Teilchengrößenverteilung zwischen 0,1 bis 30 µm, bevorzugt 0,5 bis 20 µm.

Die pulverförmigen Antiseptika werden in der Regel in mikronisierter Form geliefert. Um sie in die Silikon-Kautschuke einzumischen, werden sie vorher in eine Suspension in einem geeigneten Medium gebracht. Dabei ist darauf zu achten, dass das Medium gute Löslichkeit in dem Silikonelastomer hat. Hierfür kommen in einer Ausführungsform der Erfindung handelsübliche Silikon-Öle (R' und R" gleich Alkyl), Vinyl-terminierte Polydimethylsiloxane (R' gleich Vinyl; R' gleich Methyl) oder Polyhydrogensiloxane (R' gleich H; R' gleich Methyl) in Frage, die Viskositäten von 100 bis 1.000.000 mPas, bevorzugt von 100 bis 500.000 mPas bei 25°C, haben. Für die Eignung ist entscheidend, dass sich das Wirkstoff/Medium-Gemisch in der Perlmühle ausreichend feinteilig homogenisieren lässt.

In einer bevorzugten Variante wird als Suspensionsmedium mindestens ein vinylgruppenterminiertes Silikon-Polymer verwendet, das bei der anschließenden Vernetzungsreaktion in das Silikonelastomer chemisch eingebaut wird. Dadurch kann das Suspensionsmedium beim Einsatz des Silikonelastomers nicht mehr in das umgebende Körpergewebe oder eine Körperflüssigkeit ausgewaschen werden. Zum Beispiel sind vinylgruppenterminierte Silikon-Polymere als Polymer VS 200 (η (25°C) = 200 mPas; Vinyl-Gruppen-Gehalt 0,25 mmol/g), Polymer VS 1.000 (η (25°C) = 1.000 mPas; Vinyl-Gruppen-Gehalt 0,11 mmol/g), oder Polymer VS 165.000 (η) (25°C) = 165.000 mPas; Vinyl-Gruppen-Gehalt 0,015 mmol/g), bei der Fa. Hanse-Chemie erhältlich. Von anderen Anbietern wie Dow Corning (Syl-Off^{®} 7673: η) (25°C) = 425 mPas) oder Wacker Silicones (Dehesive^{®} 920: η (25°C) = 500 mPas) oder (Dehesive^{®} 924: η (25°C) = 200 mPas), werden vergleichbare Produkte angeboten.

"Ausdrücklich auch in jeder Wiederholungseinheit" bedeutet, dass abweichend von der exakten Definition der entsprechenden Formel, dass beispielsweise bei den angegebenen Wiederholungseinheiten der erfindungsgemäß eingesetzten Polymeren der Formel (I) in einem Molekül jedes individuelle x-mal vorkommende R³ bzw. R⁴ jeweils unabhängig aus den angegebenen Definitionen und deren Vorzugsbereichen ausgewählt werden kann, d. h. die vorkommenden Reste in einem Molekül gleich oder verschieden sein können.

C₁-C₁₂-Alkyl bedeuten im Rahmen der vorliegenden Erfindung aliphatische Kohlenwasserstoffreste mit 1 bis 12 Kohlenstoffatomen, die geradkettig oder verzweigt sein können. Beispielhaft seien Methyl, Ethyl, Propyl, n-Butyl, Pentyl, Hexyl, Heptyl, Nonyl, Decyl, iso-Propyl, Neopentyl, und 1,2,3-Trimethylhexyl aufgeführt.

C₁-C₁₂-Fluoralkyl bedeutet im Rahmen der vorliegenden Erfindung aliphatische Kohlenwasserstoffreste mit 1 bis 12 Kohlenstoffatomen, die geradkettig oder verzweigt sein können und mit mindestens einem Fluoratom substituiert sind.

Beispielhaft seien Perfluoralkylethylen, 1,1,1-Trifluorpropyl, 1,1,1-Trifluorbutyl aufgeführt, bevorzugt ist Trifluorpropyl.

Substituiertes Phenyl bedeutet im Rahmen der vorliegenden Erfindung unsubstituierte oder ein-oder mehrfach mit F, Cl, CF₃, C₁-C₆-Alkyl, C₁-C₆-Alkoxy, C₃-C₇-Cycloalkyl, C₂-C₆-Alkenyl oder Phenyl substituierte Phenylreste, bevorzugt Phenyl.

Die Polymerisation der erfindungsgemäßen Silikonkautschukformulierungen zu den erfindungsgemäßen Silikonkautschuken kann prinzipiell bei jeder hierfür üblichen Temperatur erfolgen. Bevorzugt erfolgt die Polymerisation bei oder in der Nähe der Raumtemperatur (20 bis 25 °C).

Aus der Literatur, z.B. der Produkt-Broschüre "Die platinkatalysierte Additionsvernetzung mit Elastosil R plus" der Fa. Wacker, ist bekannt, dass u.a. Amine den Platin-Katalysator in seiner Aktivität bei der Vernetzung beeinträchtigen.

Überraschend wurde jedoch gefunden, dass bei der platinkatalysierte Vernetzung der erfindungsgemäßen Silikonkautschukformulierungen trotz der Anwesenheit von Amingruppen der Platin-Katalysator seine Aktivität beibehält. An den aus den erfindungsgemäßen Silikonkautschukformulierungen hergestellten Silikonkautschuken wurden die gleichen mechanischen Eigenschaften wie an den antiseptikafreien Vergleichsproben festgestellt.

Grundsätzlich können zur Herstellung der erfindungsgemäßen Silikonkautschuke außer den oben beschriebenen, bei Raumtemperatur platinkatalysiert vernetzenden Silikonkautschukformulierungen auch hitzehärtbare (HV)-Formulierungen verwendet werden, die mit Härtungskatalysatoren auf Basis wie Benzoylperoxid oder Di-p-chlorbenzoylperoxid bei Temperaturen von ca. 200°C vulkanisiert werden und einer Hitzenachbehandlung bedürfen. Solche Silikonelastomere können nach den US-Patenten 2 541 137 oder 3 002 951 hergestellt werden.

Außerdem können zur Herstellung der erfindungsgemäßen Silikonkautschuke sogenannte Einkomponenten-Silikonkautschukformulierungen verwendet werden, die bei Raumtemperatur unter Zutritt von Luftfeuchtigkeit ohne weiteren Zusatz härten. Diese Einkomponenten-Formulierungen enthalten hauptsächlich Organopolysiloxane mit zwei endständigen Acyloxy-, wie z.B. Acetoxygruppen, die bei Zutritt von Luftfeuchtigkeit unter Bildung trifunktioneller Siloxaneinheiten hydrolysieren und im Polymerisat als Vernetzer unter Bildung von Elastomeren wirken.

Die bei Raumtemperatur platinkatalysiert vernetzenden Silikonkautschuk sind jedoch im Rahmen der vorliegenden Erfindung bevorzugt, da im Falle der HV-Silikon-Kautschuk-Systeme bei der erforderlichen hohen Vulkanisationstemperatur und der Verwendung der Peroxidkatalysatoren die eingesetzten Wirkstoffe chemisch verändert werden könnten. Darüber hinaus könnten die im Falle der HV-Silikon-Kautschuk-Systeme im Elastomer verbleibenden Katalysatorreste für toxische Reaktionen im Körper verantwortlich sein.

Die herkömmlichen feuchtigkeitshärtenden Silikon-Kautschuk-Formulierungen spalten bei Raumtemperatur unter der Einwirkung von Luftfeuchtigkeit als Nebenprodukt der Vulkanisation Essigsäure ab, die unerwünschte Nebenreaktionen mit dem eingesetzten Wirkstoff eingehen kann.

In einer bevorzugten Ausführungsform betrifft die Erfindung weiterhin die oben beschriebenen Silikonkautschukformulierungen, worin
- das Polysiloxan A) ein Polysiloxan der Formel (I) ist

   **R¹R²₂SiO-(SiR³R⁴O-)ₓSiR¹R²₂** **(I),**

   worin die Reste
   - R¹ und R²: jeweils gleich oder verschieden sein können, und jeweils für C₁-C₁₂-Alkyl, C₁-C₁₂-Fluoralkyl, und gegebenenfalls substituiertes Phenyl oder Naphthyl stehen,
   - R³ und R⁴: jeweils gleich oder verschieden sein können, ausdrücklich auch in jeder Wiederholungseinheit, und jeweils für C₁-C₁₂-Alkyl, C₁-C₁₂-Fluoralkyl und gegebenenfalls substituiertes Phenyl oder Naphthyl stehen,
   - R¹ und R³: darüber hinaus unabhängig voneinander auch für C₁-C₁₂-Alkenyl stehen, wobei das Polymer 0,0002 bis 3 Gew.-% Vinylgruppen enthält und das Molekül über mindestens zwei olefinisch ungesättigte Mehrfachbindungen verfügt,
   - x: für eine ganze Zahl von 2 bis 15000 steht und so variiert wird, dass die Viskosität des Polymeren von 0,1 bis 1.000 Pas bei 25°C reicht,
- ein Füllstoff B) mit einer spezifischen Oberfläche zwischen 50 und 400 m²/g nach BET eingesetzt wird,
- das Polyhydrogensiloxan I) der Formel (II) entspricht

   **R²¹R²²₂SiO-(SiR²³R²⁴O-)ₓSiR²¹R²²₂** **(II),**

   worin die Substituenten
   - R²¹ und R²²: jeweils gleich oder verschieden sein können, und jeweils für C₁-C₁₂-Alkyl, C₁-C₁₂-Fluoralkyl, und gegebenenfalls substituiertes Phenyl oder Naphthyl stehen,
   - R²³: jeweils ausdrücklich auch in jeder Wiederholungseinheit unabhängig voneinander für Wasserstoff, C₁-C₁₂-Alkyl, C₁-C₁₂-Fluoralkyl und gegebenenfalls substituiertes Phenyl oder Naphthyl steht, wobei R²³ in mindestens 4 dieser Silyldioxyleinheiten für Wasserstoff steht, so dass ein Molekül über mindestens 4 Vernetzungsstellen verfügt,
   - R²⁴: jeweils ausdrücklich auch in jeder Wiederholungseinheit unabhängig voneinander für C₁-C₁₂-Alkyl, C₁-C₁₂-Fluoralkyl und gegebenenfalls substituiertes Phenyl oder Naphthyl steht,
   - x: für eine ganze Zahl von 4 bis 10000 steht und so variiert wird, dass die Viskosität des Polymeren von von 0,0005 bis 0,1 Pas bei 25°C reicht,
   der Katalysator aus der Platingruppe J) ein Katalysator ist, der die Hydrosilylierungsreaktion katalysiert und ausgewählt wird aus Metallen der Platingruppe, wie Pt, Rh, Ni, Ru, und Verbindungen von Metallen der Platingruppe, wie Salze oder Komplexverbindungen davon,
   für die Suspension K), mindestens ein Polysiloxan der Formel (I) gemäß A) als Suspensionsmedium verwendet wird, worin die Substituenten R¹ bis R⁴ jeweils Methyl-und Vinylreste sind, so dass das Polymer 0,0002 bis 3 Gew.- % Vinylgruppen enthält, und das Molekül über mindestens zwei olefinisch ungesättigte Mehrfachbindungen verfügt, und x so variiert, dass die Viskosität des Polymeren von 0,1 bis 1.000 Pas bei 25°C reicht, und die Suspension K) mindestens ein Antiseptikum ausgewählt aus der Gruppe bestehend aus Chlorhexidin, Octenidin, PHMB, Quats und Taurolidin enthält, welches jeweils in einer mittleren Teilchengröße d₅₀ von 0,5 bis 15 µm, bevorzugt zwischen 1 und 10 µm, und einer Teilchengrößenverteilung zwischen 0,1 bis 30 µm, bevorzugt 0,5 bis 20 µm enthält.

Bevorzugt, besonders bevorzugt oder ganz besonders bevorzugt sind Ausführungsformen, welche von den unter bevorzugt, besonders bevorzugt oder ganz besonders bevorzugt genannten Parametern, Verbindungen, Definitionen und Erläuterungen Gebrauch machen.

Die in der Beschreibung aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Polymere Additive wie Polyvinylpyrrolidon oder Polyethylenglykol können grundsätzlich den Silikon-Kautschuken bis zu einer Konzentration von 5 Gew.-% beigemischt werden. In einer bevorzugten Ausführungsform wird auf solche die Freisetzung an die Oberfläche beeinflussende Additive verzichtet.

Für die Herstellung der Suspension K) werden übliche Dissolver verwendet, die als Perlmühle genutzt werden. In das Temperiergefäß werden Wirkstoff, Suspensionsmedium und Perlen gegeben. Auf das Gesamtvolumen werden zusätzlich noch 1/3 Glasperlen hinzugegeben. Anstelle der Glasperlen können auch andere Mahlperlen verwendet werden, z.B. aus Zirkonoxid.

Die Konzentration des Wirkstoffs in der Suspension K) beträgt 10 bis 40 Gew.-%, bevorzugt 15 bis 35 Gew.-%. Das Mahlgut kann bis 100°C erwärmt werden, um die für die Mahlung geeignete Viskosität einzustellen. Jedoch ist grundsätzlich eine möglichst niedrige Temperatur zu bevorzugen um die Verarbeitung des Wirkstoffes möglichst schonend durchzuführen.

Die Suspensionen K) werden z.B. auf dem Walzenstuhl in die Silikon-Kautschuk-Matrix eingearbeitet. Dazu dürfen sie nicht zu niederviskos sein, da sie zu leicht wegfließen. Bei zu hochviskosen Pasten besteht die Gefahr, dass sie nicht mehr homogen in den Silikon-Kautschuk eingearbeitet werden können.

Daher sollten die erfindungsgemäßen Suspensionen K) bei Raumtemperatur Viskositäten von 10.000 mPas bis 2.000.000 mPas aufweisen. Davon sind für den Einsatz für das erfindungsgemäße Verfahren solche bevorzugt geeignet, die Viskositäten bei 25°C von 20.000 bis 1.000.000 mPas, besonders bevorzugt von 50.000 bis 500.000 mPas aufweisen.

In den erfindungsgemäßen Suspension K) haben die Wirkstoffe in der Regel eine mittlere Teilchengröße d₅₀ von 0,5 bis 15 µm, bevorzugt zwischen 1 und 10 µm, und einer Teilchengrößenverteilung zwischen 0,1 bis 30 µm, bevorzugt 0,5 bis 20 µm.

Darüber hinaus bleiben die hergestellten Suspensionen K) in diesem Viskositätsbereich mehrere Wochen stabil und sedimentieren nicht. Auf zusätzliche Dispersionshilfsmittel kann verzichtet werden.

In der erfindungsgemäßen wirkstoffhaltigen Silikon-Kautschuk-Mischungen sollten vorzugsweise die Komponenten A) + F) + K) sowie I) in einem solchen Mengenverhältnis vorliegen, daß das molare Verhältnis von direkt an ein Siliciumatom gebundenem Wasserstoff (SiH) in der Komponente I) zu ungesättigten Resten in den Komponenten A), F) und K) zwischen 0,1 und 20, bevorzugt zwischen 0,8 und 10 und ganz besonders bevorzugt zwischen 1 und 5 liegt.

Die erfindungsgemäßen Silikonkautschukformulierungen umfassen die Komponenten A) bis K), wobei die Komponenten B) bis H) wahlweise vorhanden sind. Bevorzugt enthält die erfindungsgemäße Silikonkautschukformulierung zusätzlich zu den notwendigen Komponenten A), I), J) und K) die Komponente G).

Bei den erfindungsgemäßen Kautschukformulierungen können die Bestandteile A), Polysiloxane der Formel (I), und I), Polyhydrogensiloxane der Formel (II), teilweise oder vollständig in der Komponente K), der Suspension, als Suspensionsmedium enthalten sein. Hierdurch sind auch Formulierungen ohne separate weitere Komponenten A) und/oder I) erfindungsgemäß erfasst.

Die Erfindung betrifft weiterhin ein Verfahren zur Herstellung der erfindungsgemäßen Silikonkautschukformulierungen, welches dadurch gekennzeichnet ist, dass zunächst die Komponenten A) bis J) zusammengegeben und vermischt werden und K) anschließend zugegeben und eingearbeitet wird.

Die Suspension K) wird den Silikon-Kautschukmassen auf dem Walzenstuhl, in einem Kneter oder auf dem Extruder hinzugefügt. In einer bevorzugten Ausführungsform werden bei 2-komponentigen Systemen die beiden Komponenten vorgemischt und danach die Wirkstoff-Suspension zugegeben.

Vorzugsweise erfolgt die Herstellung der erfindungsgemäßen Silikonkautschukformulierungen, in dem man zur Komponente A) die wahlweise verwendeten Hydrophobierungsmittel E) und F) und gegebenenfalls Wasser gibt und bei Temperaturen von 20 bis 160°C unter Stickstoffatmosphäre die Komponente D) (Füllstoff) einmischt und damit die Hydrophobierung des Füllstoffes D) unter Reaktion mit den Komponenten E) und F) bewirkt. Anschließend werden überschüssige Reaktionsprodukte E) und F) sowie flüchtige Reaktionsprodukte daraus (wie Silanole, Alkohole und Wasser) entfernt (vorzugsweise durch Erhitzen bei 150 bis 170°C ggf. unter Vakuum). In die resultierende, vorzugsweise abgekühlte Mischung dosiert man im Fall einer Zweikomponentenformulierung entweder die Komponente H) und I) oder alternativ J). Werden die Komponenten C), D) und G) benötigt erfolgt deren Dosierung nach dem Entfernen der flüchtigen Komponenten E) und F). Im Falle der Einkomponentenformulierung werden H), I) und J) zudosiert, wobei zunächst der Inhibitor H) zudosiert wird.

Es werden übliche Mischer verwendet, wie zum Beispiel Innenmischer, Schneckenmischer, Kneter, bevorzugt Kneter.

Die erfindungsgemäßen vernetzbaren Silikonkautschukmassen können dabei 1-, 2-oder aber auch mehrkomponentige Systeme sein. Mehrkomponentige Systeme sind z.B. solche, die H), I) und J) getrennt enthalten.

Die folgenden Beispiele dienen der Erläuterung der Erfindung, ohne dabei limitierend zu wirken,

### Beispiele

### Rohstoffe:

### Silikon-Festkautschuke für Urin-Katheter

-Für die Silikon-Foley-Katheterschaft-Herstellung wurde ein 50:50 A/B 2K platin-katalysiertes Fest-Silikon-Kautschuk-System 3097/PA der Fa. Degania verwendet.

A-Komponente: Vinyl-gruppen terminiertes Polydimethylsiloxan; enthält die Bestandteile A), B) und J).

B-Komponente: Polyhydrogensiloxan; enthält die Bestandteile B), G) und I).

Die Mengenverhältnisse der Bestandteile A), B); G), I) und J) sind in den A/B-Komponenten so eingestellt, dass das Silikonelastomer eine Shore A-Härte von 65 hat.

### Silikon-Festkautschuke für Musterplatten

Für die Laborversuche zur Herstellung von Musterplatten wurde ein 1K platin-katalysierter additionsvernetzender Fest-Silikon-Kautschuk Addisil 160 der Fa. GE Bayer Silicones verwendet.

### Suspensionsmedium

Polymer VS 1.000: Vinylgruppen terminiertes Polydimethylsiloxan der Fa. Hanse-Chemie; Viskosität /bei 25°C) = 1.000 mPas; Vinyl-Gehalt: 0,11 mmol/g

### Wirkstoffe

Octenidindihydrochlorid wurde als weißes Pulver mit einem mittleren Patikeldurchmesser von 15 µm in einer Reinheit von > 98,5% von der Fa. PCAS, Turku, Finnland, bezogen.

Vantocil Hydrochlorid (PHMB) wurde als leicht gelbes kristallines Pulver von der Fa. Avecia bezogen. Vor dem Einsatz wurde es gemahlen, wobei ein farbloses Pulver mit einer mittleren Partikelgröße von 16 µm hergestellt wurde.

### Beispiele 1-2

### Herstellung der Wirkstoff-Suspension in Polymer VS 1.000:

Für die Herstellung der Suspension wurde der Dissolver Dispermat F 105 der Fa. VMA Getzmann verwendet. Als Mahlwerkzeug wurde eine Kunststoff-Scheibe verwendet. Das Temperier-Gefäß wurde mit einem Thermostat der Fa. Julabo HC temperiert.

In einem 250 ml Temperier-Gefäß werden 45 g vinylterminiertes Silikon-Polymer VS 1000, 15 g Wirkstoff (siehe Tabelle) und 20 ml Zirkonoxidperlen mit einem Durchmesser von ca. 2,8 mm eingewogen. Das Gefäß wird auf 25°C temperiert und der Dissolver eingefahren. Das Mahlgut wird 20 Minuten bei 8.000/min gemischt. Danach werden die Zirkonoxidperlen abgetrennt. Es wird eine weiße cremige Paste erhalten. Der mittlere Teilchendurchmesser wurde bestimmt.

| | **Wirkstoff** | **Konzentration** | **Mittlere Teilchengröße d₅₀** |
|---|---|---|---|
| Beispiel 1 | Octenidindihydrochlorid | 25 Gew.-% | 1,7 µm |
| Beispiel 2 | PHMB | 25 Gew.-% | 9,2 µm |

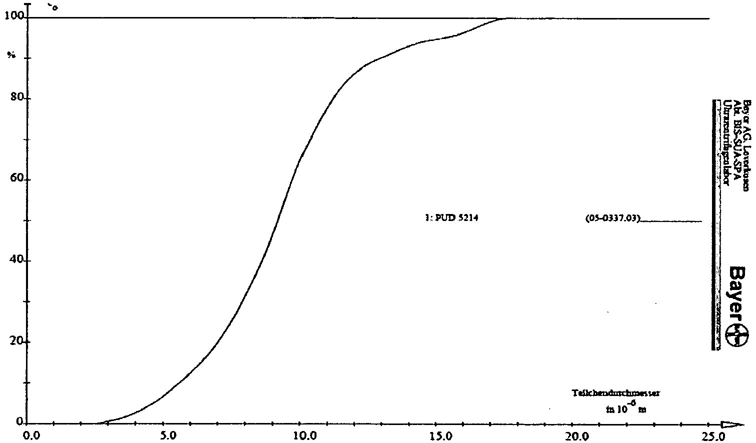

Teilchengrößenverteilung der PHMB Suspension aus Beispiel 2 mittels Ultrazentrifuge

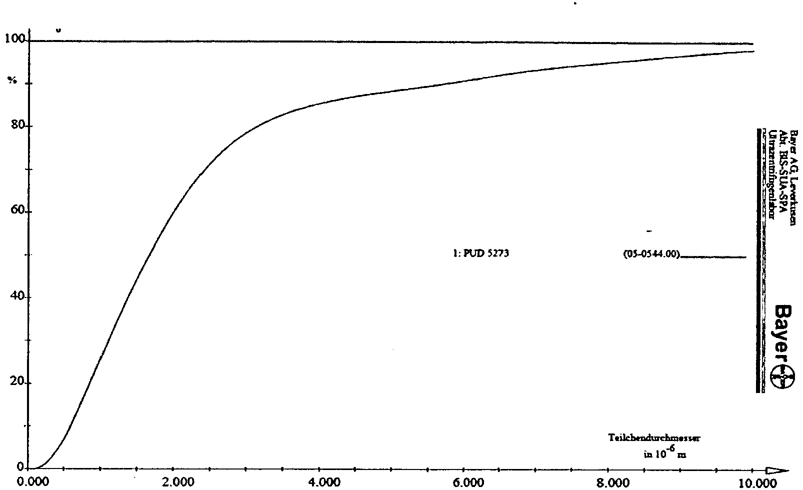

Teilchengrößenverteilung der Octenidindihydrochlorid-Suspension aus Beispiel 1 mittels Ultrazentrifuge

### Beispiel 3

Die thermische Stabilität der Ocetnidindihydrochloridsuspension aus Beispiel 1 wurde mittels thermogravimetrischer Analyse (TGA) bestimmt.

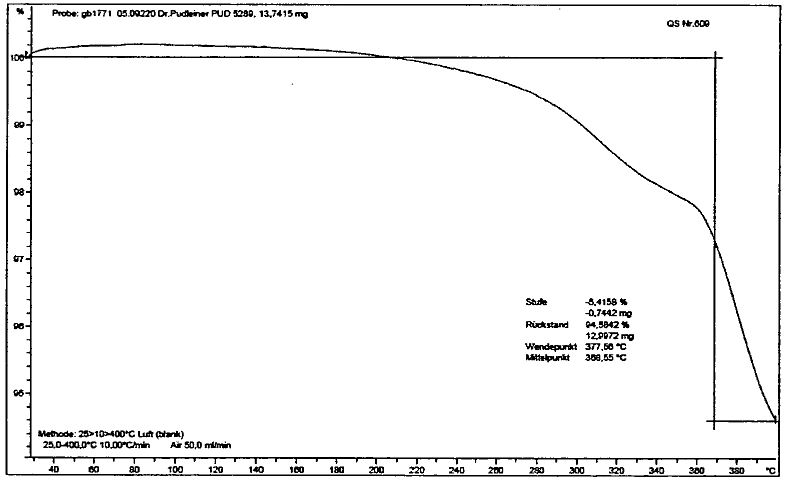

### TGA-Kurve der Suspension aus Beispiel 1

Die Suspension ist bis mindestens 200°C thermisch stabil, so dass die nach Einmischung in den Silikon-Kautschuk bei 170°C durchzuführende Vernetzungsreaktion ohne Stabilitätsprobleme des Wirkstoffs oder des Suspensionsmediums stattfinden kann.

### Beispiele 4-7

Auf einem Misch-Walzwerk der Fa. Vogt (2 Walzen; Walzendurchmesser 80 mm, Walzenbreite 280 mm; Arbeitsbreite 200 mm) wurden der Fest-Silikon-Kautschuk Addisil 160 unter Kühlung bei Raumtemperatur aufgebracht. Die vordere Drehwalze wurde mit 16,5 min⁻¹, die hintere Walze mit 20 min⁻¹ betrieben. Für die Einmischung der Wirkstoffe wurden anschließend in den Walzenspalt die in der Tabelle angegebenen Mengen der Wirkstoff-Suspension aus dem Beispiel 1 oder 2 hinzugegeben und solange weiter gemischt, bis die Suspension homogen eingearbeitet war. Anschließend wurde der wirkstoffhaltige Silikon-Kautschuk als ca. 2 mm dickes Fell von der Walze abgezogen.

| | **Silikon-Kautschuk Addisil 160 in g** | **Octenidindihydrochlorid-Suspension auf der Basis Polymer VS 1000 Menge Suspension** | **WirkstoffKonzentration** |
|---|---|---|---|
| **Beispiel 4** | 96 | 4 g Suspension aus Beispiel 1 | 1 Gew.-% |
| **Beispiel 5** | 92 | 8 g Suspension aus Beispiel 1 | 2 Gew.-% |

| | **Silikon-Kautschuk Addisil 160 in g** | **PHMB-Suspension auf der Basis Polymer VS 1000 Menge Suspension** | **WirkstoffKonzentration** |
|---|---|---|---|
| **Beispiel 6** | 96 | 4 g Suspension aus Beispiel 2 | 1 Gew.-% |
| **Beispiel 7** | 92 | 8 g Suspension aus Beispiel 2 | 2 Gew.-% |

Danach wurden die jeweiligen Platten zur Aushärtung (Vernetzung) 2 Stunden bei 170°C erhitzt.

### Beispiel 8

### Wirkstoffverteilung

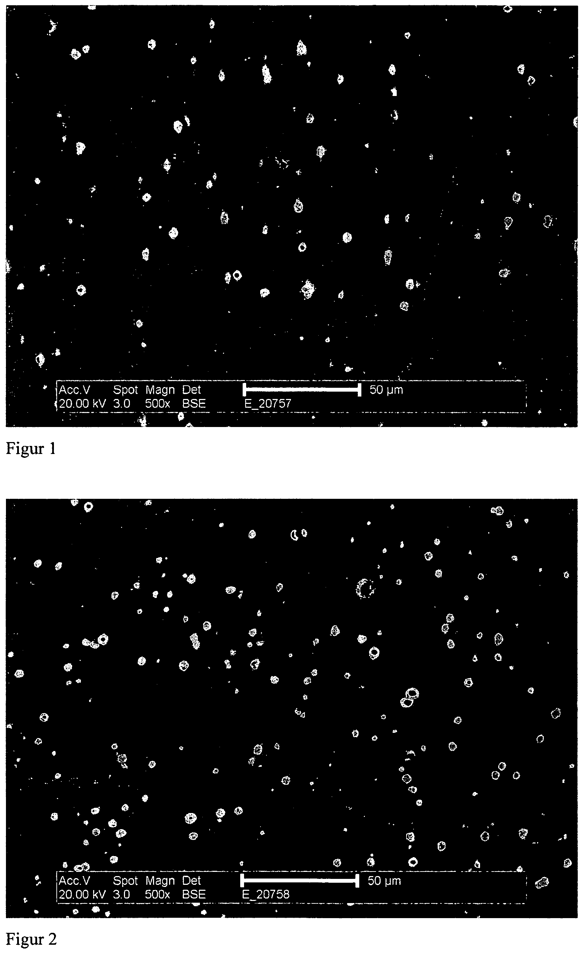

Durch rasterelektronenmikroskopische Aufnahmen mit EDX-Kopplung können spezifisch durch Chlor-Detektion nur die Wirkstoff-Partikel in der Silikon-Elastomer-Matrix sichtbar gemacht werden. Figuren 1 und 2 zeigen rasterelektronenmikroskopische Aufnahmen der Silikon-Elastomer-Musterplättchen aus Beispiel 6 (1 Gew.-% PHMB) und Beispiel 7 (2 Gew.-% PHMB) (PHMB-Wirkstoff-Partikel hell dargestellt). Die Aufnahmen zeigen, dass der Wirkstoff homogen und sehr feinteilig, ca. 1 bis 5 µm große Teilchen in der Silikon-Elastomer-Matrix verteilt ist.

### Beispiel 9

### Kontinuität des Oberflächenschutzes der PHMB-haltigen Silikon-Elastomer-Plättchen

Die Elutionsversuche wurden mit den wirkstoffhaltigen Silikon-Elastomer-Platten aus den Beispielen 6 und 7 durchgeführt, die in 1 cm² große Stücke zerschnnitten wurden Die Proben wogen jeweils ca. 2,1 g und hatten eine Oberfläche von ca.22 bzw 25 cm². Als Elutionsmedium wurden 16 ml demineralisiertes Wasser verwendet. Nach 1 h, 4 h, 8 h, 24 h, 48 h, 120 h und 360 Stunden (15 Tage) wurde das Elutionsmedium Wasser jeweils gegen neues ausgetauscht und der Wirkstoff-Gehalt in den Lösungen bestimmt.

| Stunden | Muster aus Beispiel 6 [µg/g*cm²] | Muster aus Beispiel 7 [µg/g*cm²] |
|---|---|---|
| **1,00** | 0,810 | 2,19 |
| **4,00** | 0,980 | 2,36 |
| **8,00** | 1,150 | 2,53 |
| **24,00** | 1,320 | 2,70 |
| **48,00** | 1,490 | 2,87 |
| **120,00** | 1,660 | 3,20 |
| **360,00** | 1,830 | 3,43 |

Über die Untersuchungsdauer findet eine Diffusion des Wirkstoffs an die Probenkörperoberfläche statt und sorgt dadurch für einen kontinuierlichen Schutz der Oberfläche gegen die Besiedlung mit Bakterien und Hefen.

### Beispiel 10

### Kontinuität des Oberflächenschutzes der Octenidindihydrochlorid-haltigen Silikon-Elastomer-Plättchen

Der Elutionsversuche wurden mit den Platten aus den Beispielen 4 und 5 durchgeführt, die in 1 cm² große Stücke zerschnnitten wurden. Die Proben wogen jeweils ca. 2,0 g und hatten eine Oberfläche von ca.35 cm². Als Elutionsmedium wurden 16 ml demineralisiertes Wasser verwendet. Nach 1 h, 4 h, 8 h, 24 h, 48 h, 120 h und 360 Stunden (15 Tage) wurde das Elutionsmedium Wasser jeweils gegen neues ausgetauscht und der Wirkstoff-Gehalt in den Lösungen bestimmt.

| Stunden | Muster aus Beispiel 4 [µg/g*cm²] | Muster aus Beispiel 5 [µg/g*cm²] |
|---|---|---|
| **1,00** | **1,72** | **0,01** |
| **4,00** | **2,33** | **0,02** |
| **8,00** | **2,61** | **0,03** |
| **24,00** | **3,59** | **0,04** |
| **48,00** | **4,04** | **0,05** |
| **120,00** | **4,05** | **0,06** |
| **360,00** | **4,27** | **0,07** |

Über die Untersuchungsdauer findet eine Diffusion des Wirkstoffs an die Probenkörperoberfläche statt und sorgt dadurch für einen kontinuierlichen Schutz der Oberfläche gegen die Besiedlung mit Bakterien und Hefen.

Die Proben geben über 15 Tage geringe Mengen Wirkstoff ab, wobei die Menge weit von einer pharmakologisch wirksamen Dosis entfernt ist.

### Beispiel 11

### Mikrobiologische Bewertung der Proben aus den Beispielen 4 bis 5

Aus den wirkstoffhaltigen Silikon-Elastomer-Platten der Beispiele 4 und 5 wurden Prüfplättchen mit ca. 5 mm Durchmesser ausgestanzt und mittels Gamma-Strahlung sterilisiert.. Mit diesen sterilen Prüfplättchen wurden die folgenden mikrobiologischen Tests durchgeführt.

### 1. Methode

Die Untersuchung zur antibakteriellen Wirkung erfolgte mit Hilfe des Agardiffusionstestes.

### 1.1. Testplatten

Petrischalen von 9 cm Durchmesser wurden mit 18 ml Mueller-Hinton-Agar nach NCCLS (Merck KGaA Darmstadt / Lot ZC217935 430) gegossen.

### 1.2. Bakteriensuspension

Aus einer Übernachtkultur vom Teststamm auf Columbia-Blut-Agar wurde eine Suspension mit der Dichte von McFarland 0.5 in NaCl-Lsg. 0.85% hergestellt.Für die Suspension wurde ein "Kolonie - Pool " aus 3 bis 4 mit der Impföse angetupften Kolonien verwendet.

### 1.3. Testansatz

In die Suspension wird ein steriler Wattetupfer getaucht. Der Flüssigkeitsüberschuss wird am Glasrand ausgedrückt. Mit dem Tupfer wird die Mueller-Hinton Agarplatte in drei Richtungen im Winkel von jeweils 60° gleichmäßig beimpft. Danach werden die Werkstoffproben auf die Testplatte aufgelegt. Die Testplatten wurden bei 37° C für 24 Stunden bebrütet. Die antibakterielle Wirkung der Proben wurde an Hand von Hemmhöfen beurteilt.

### 2.2 Teststämme

Als Teststämme wurde repräsentativ gramnegative Stäbchen, ein MRSA (Staphylococcus aureus MRSA 1150-93) und eine Candida Spezies (Candida albicans ATCC 14053) ausgewählt.

### 3. Ergebnisse

Bei den Proben der Beispiele 4 und 5 konnte ein Hemmhof nachgewiesen werden. Der Wirkstoff im Silikonwerkstoff verhindert damit das Bakterienwachstum.

Besonders auffällig ist die Wirkung gegenüber dem Sprosspilz Candida albicans.

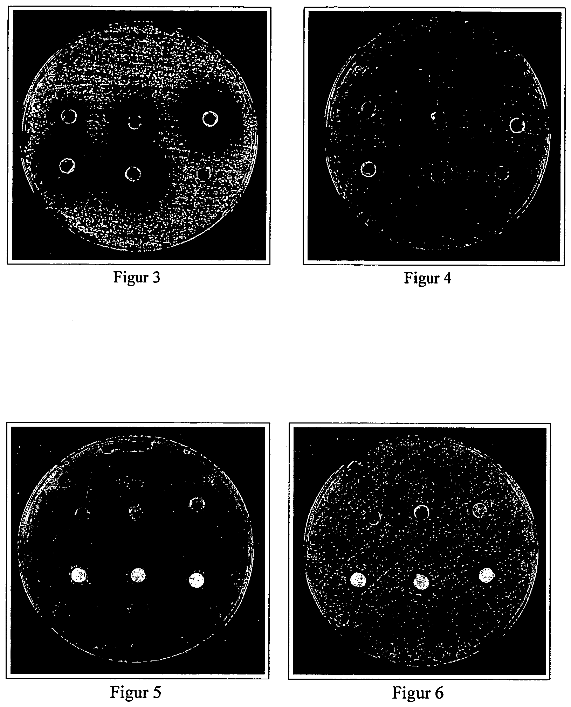

Die Figuren 3 und 4 dokumentieren das Versuchsergebnis. Dabei zeigt Figur 3 die Hemmhöfe der Proben aus Beispiel 4 (5217) und 5 (5219) gegen Candida albicans ATCC 14053, Figur 4 zeigt die Hemmhöfe der Proben aus Beispiel 4 (5217) und 5 (5219) gegen Staphylococcus aureus MRSA 1150-93

### Beispiel 12

### Mikrobiologische Bewertung der Proben aus den Beispielen 6 bis 7

Aus den wirkstoffhaltigen Silikon-Elastomer-Platten der Beispiele 6 und 7 wurden Prüfplättchen mit ca. 5 mm Durchmesser ausgestanzt und mittels Gamma-Strahlung sterilisiert.. Mit diesen sterilen Prüfplättchen wurden die folgenden mikrobiologischen Tests durchgeführt.

### 1. Methode

Die Untersuchung zur antibakteriellen Wirkung erfolgte mit Hilfe des Agardiffusionstestes.

### 1.1. Testplatten

Petrischalen von 9 cm Durchmesser wurden mit 18 ml Mueller-Hinton-Agar nach NCCLS (Merck KGaA Darmstadt / Lot ZC217935 430) gegossen.

### 1.2. Bakteriensuspension

Aus einer Übernachtkultur vom Teststamm auf Columbia-Blut-Agar wurde eine Suspension mit der Dichte von McFarland 0.5 in NaCl-Lsg. 0.85% hergestellt.Für die Suspension wurde ein "Kolonie - Pool "aus 3 bis 4 mit der Impföse angetupften Kolonien verwendet.

### 1.3. Testansatz

In die Suspension wird ein steriler Wattetupfer getaucht. Der Flüssigkeitsüberschuss wird am Glasrand ausgedrückt. Mit dem Tupfer wird die Mueller-Hinton Agarplatte in drei Richtungen im Winkel von jeweils 60o gleichmäßig beimpft. Danach werden Werkstoffproben auf die Testplatte aufgelegt. Die Testplatten wurden bei 37o C für 24 Stunden bebrütet. Die antibakterielle Wirkung der Proben wurde an Hand von Hemmhöfen beurteilt.

### 2.2. Teststämme

Als Teststämme wurden repräsentativ ATCC Stämme von drei gramnegative Stäbchen, einem Staphylococcus aureus, einem MRSA Stamm und einer Candida Spezies ausgewählt.

### 3. Ergebnisse

| | | |
|---|---|---|
| gram - Stäbchen | 35218 | Escherichia coli ATCC 35218 |
| | 35659 | Proteus mirabilis ATCC 35659 |
| | 27853 | Pseudomonas aeruginosa ATCC 27853 |
| | | |
| gram + Kokken | 29213 | Staphylococcus aureus ATCC 29213 |
| | 0134-93 | Staphylococcus aureus MRSA 0134 - 93 |
| | | |
| Sprosspilz | 14053 | Candida albicans ATCC 14053 |

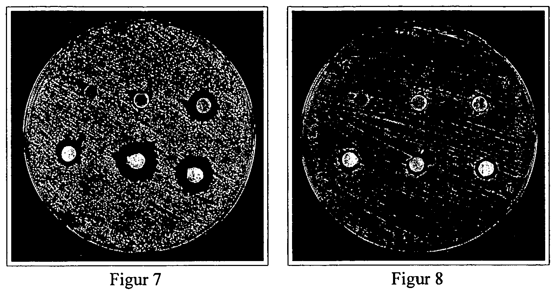

Die antibakterielle Wirkung der Proben konnte anhand der Hemmhöfe nachgewiesen werden. Die Figuren 5 bis 8 dokumentieren die Ergebnisse. Figur 5 zeigt die Hemmhöfe der Proben aus Beispiel 6 (5289) und 7 (5291) gegen Escherichia coli ATCC 35218. Figur 6 zeigt die Hemmhöfe der Proben aus Beispiel 6 (5289) und 7 (5291) gegen Staphylococcus aureus MRSA 0134-93. Figur 7 zeigt die Hemmhöfe der Proben aus Beispiel 6 (5289) und 7 (5291) gegen Candida albicans ATCC 14053. Figur 8 zeigt die Hemmhöfe der Proben aus Beispiel 6 (5289) und 7 (5291) gegen Staphylococcus aureus ATCC 29213.

### Beispiel 13

In das A/B 2 K platin-katalysierte additionsvernetzende Silikon-Kautschuk-System der Fa. Degania wurde die Wirkstoff-Suspension aus Beispiel 1 auf einem Kalander-Kneter eingemischt und der Octenidindihydrochlorid-haltige Silikon-Kautschuk anschleißend zu Foley-Katheter-Schäften mit 1 Gew.-% Octenidindihydrochlorid weiterverarbeitet.

### Beispiel 14

### Kontinuität des Oberflächenschutzes der Octenidindihydrochlorid-haltigen Silikon-Elastomer-Foley-Katheter-Schäfte

Die Elutionsversuche wurden mit den Schäften aus dem Beispiel 13 durchgeführt, die in 2 cm lange Stücke zerschnnitten wurden. Die Proben wogen jeweils ca. 2,0 g und hatten eine Oberfläche von ca.33 cm². Als Elutionsmedium wurden 16 ml künstlicher Urin der folgenden Zusammensetzung verwendet

| | |
|---|---|
| Harnstoff | 1.94% |
| NaCl | 0.84% |
| MgSO₄, Heptahydrat | 0.11% |
| CaCl₂ | 0.06% |

Nach 1 h, 4 h, 8 h, 24 h, 48 h, 120 h und 360 Stunden (15 Tage) wurde das Elutionsmedium jeweils gegen neues ausgetauscht und der Wirkstoff-Gehalt in den Lösungen bestimmt.

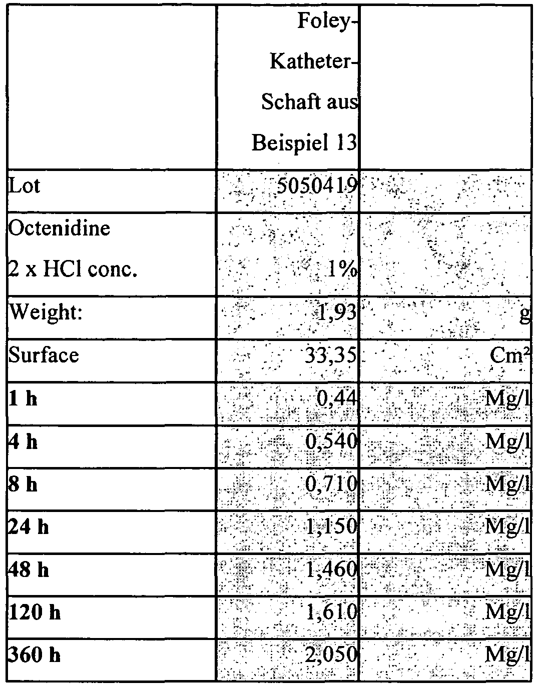

Über die Untersuchungsdauer findet eine Diffusion des Wirkstoffs an die Probenkörperoberfläche statt und sorgt dadurch für einen kontinuierlichen Schutz der Oberfläche Besiedlung mit Bakterien und Hefen.

Die Proben geben über 15 Tage geringe Mengen Wirkstoff ab, wobei die Menge weit von einer pharmakologisch wirksamen Dosis entfernt ist.

### Beispiel 15

### Biokompatibilitätsprüfungen gemäß DIN ISO 10993-5 (1999), EN 30993-5 (1994)

Die Katheter-Schäfte aus Beispiel 13 wurden dazu insteril 24 h bei 37°C und 5% pCO₂ in Extraktionsmedium (DMEM inklusive Antibiotika ohne FCS) extrahiert. Das Oberflächen-VolumenVerhältnis betrug 1cm²/ml Extraktionsmedium. Nach Abschluss der Extraktion wurde das Extraktionsmedium sterilfiltriert und mit sterilem FCS supplementiert (Endkonzentrdation: 10% FCS im Extraktionsmedium). Das FCS-supplumentierte Extraktionsmedium wurde steril auf vorkultivierte L 929-Mausfibroblastenzellen gegeben und 48h bei 37°C, 5% pCO₂ inkubiert. Der Extrakt wurde vierfach parallel geprüft.

Als toxische Positivkontrolle wurde Triton X 100 verwendet, welches zu den verwendeten L929-Zellen zugegeben wurde (Endkonzentration 1%). Als nichttoxische Negativkontrolle diente Zellkulturmedium.

Nach der 48-stündigen Inkubation wurde die Freisetzung von Lactatdehydrogenase (LDH) im Zellkulturüberstand mittels eines photometrischen Verfahrens gemessen. Die Zellen wurden anschließend alkalisch lysiert und der Proteingehalt nach der Bradfordmethode ermittelt.

Die Zellen wurden zur Bestimmung der Zellzahl fixiert und mit Methylenblau gefärbt. Nach saurer Extraktion des Methylenblaus wurde der Farbstoffgehalt mittels Photometrie erfasst und die Extinktion mit einer Standardkurve verglichen, um die Zellzahl anhand der Farbstoffkonzentration zu bestimmen.

### Zellzahl:

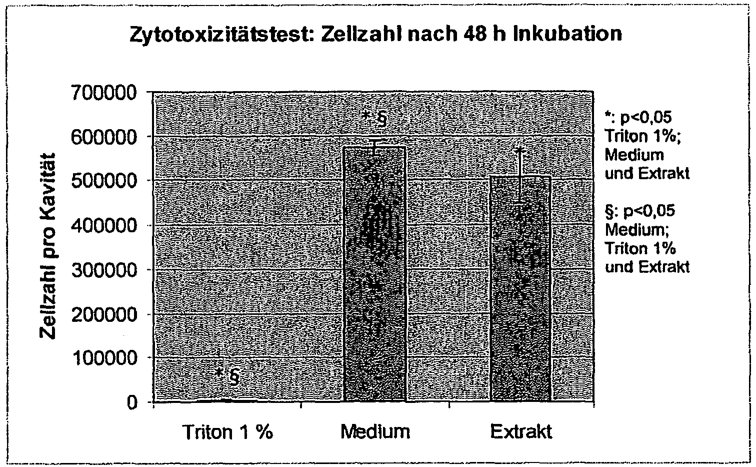

Der Wert der Positivkontrolle liegt mit 0,5% des Negativkontrollwertes im gültigen Bereich unterhalb von 35% relativ zur Kulturmediumkontrolle.

Zellzahlwerte von Extrakten, die den Zellzahlwert der Negativkontrolle um mehr als 19% unterschreiten, werden als zytotoxisch bewertet. Dies ist im vorliegenden Extrakt der Probe aus Beispiel 13 nicht der Fall. Der Materialextrakt zeigt keine zytotoxische Reaktion.

### Proteingehalt:

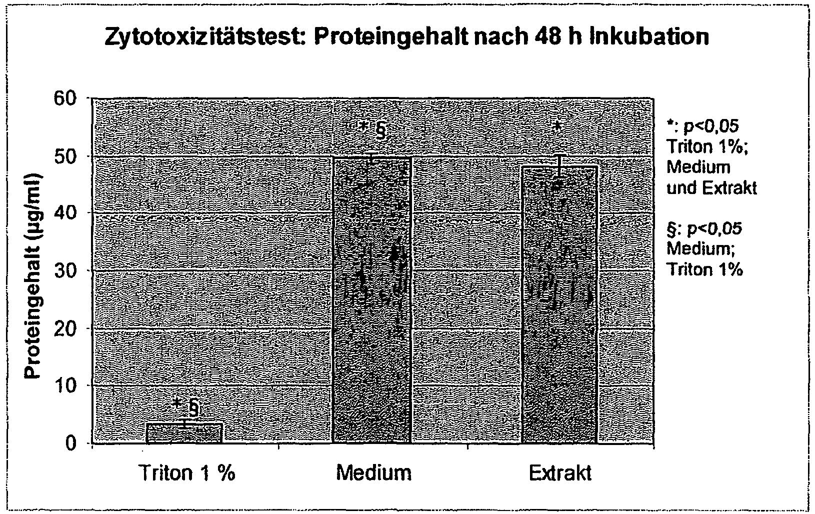

Der Wert der Positivkontrolle liegt mit 6,8% des Negativkontrollwertes im gültigen Bereich unterhalb von 35% relativ zur Kulturmediumkontrolle.

Proteinwerte von Extrakten, die den Proteingehaltswert der Negativkontrolle um mehr als 19% unterschreiten, werden als zytotoxisch bewertet. Dies ist im vorliegenden Extrakt der Probe aus Beispiel 13 nicht der Fall. Der Materialextrakt zeigt keine zytotoxische Reaktion.

### LDH-Freisetzung:

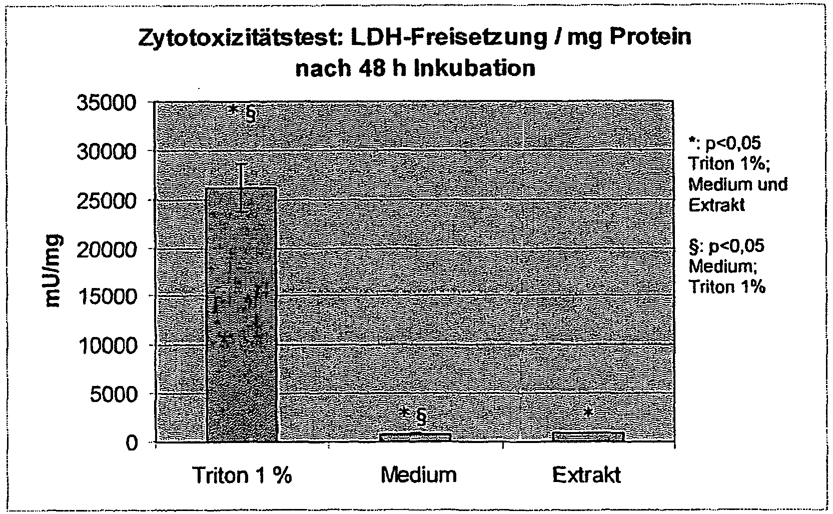

Im Gegensatz von Triton X 100 im Zellkulturmedium ist die spzeifische LDH-Aktivität gegenüber der Negativkontrolle (Medium) mehr als 31-fach erhöht.

Die Probe aus Beispiel 13 wirkt nicht zytotoxisch.

## Patentansprüche

1. Silikonkautschukformulierung enthaltend
A) mindestens ein Polysiloxan der Formel (I),
**R¹R²₂SiO-(SiR³R⁴O-)ₓSiR¹R²₂** **(I),**
worin die Reste
R¹ und R² jeweils gleich oder verschieden sein können, und jeweils für C₁-C₁₂-Alkyl, C₁₋C₁₂-Fluoralkyl, und gegebenenfalls substituiertes Phenyl oder Naphthyl stehen,
R³ und R⁴ jeweils gleich oder verschieden sein können, ausdrücklich auch in jeder Wiederholungseinheit, und jeweils für C₁-C₁₂-Alkyl, C₁-C₁₂-Fluoralkyl und gegebenenfalls substituiertes Phenyl oder Naphthyl stehen, darüber hinaus auch für -OSiR²R³R, worin R die Fortsetzung der Siloxankette analog Formel (I) in der Verzweigung symbolisiert, so dass das Polymermolekül Verzweigungseinheiten der Formel SiO_{4/2} und R³SiO_{3/2} aufweisen kann,
R¹ und R³ darüber hinaus unabhängig voneinander auch für C₁-C₁₂-Alkenyl stehen, wobei das Polymer 0,0002 bis 3 Gew.-% Vinylgruppen enthält und das Molekül über mindestens zwei olefinisch ungesättigte Mehrfachbindungen verfügt,
x für eine ganze Zahl von 2 bis 15000 steht und so variiert wird, dass die Viskosität des Polymeren von 0,1 bis 1.000 Pas bei 25°C reicht,
I) mindestens ein Polyhydrogensiloxan der Formel (II)
**R²¹R²²₂SiO-(SiR²³R²⁴O-)ₓSiR²¹R²²2** **(II),**
worin die Substituenten
R²¹ und R²² jeweils gleich oder verschieden sein können, und jeweils für C₁-C₁₂-Alkyl, C₁-C₁₂-Fluoralkyl, und gegebenenfalls substituiertes Phenyl oder Naphthyl stehen,
R²³ jeweils ausdrücklich auch in jeder Wiederholungseinheit unabhängig voneinander für Wasserstoff, C₁-C₁₂-Alkyl, C₁-C₁₂-Fluoralkyl und gegebenenfalls substituiertes Phenyl oder Naphthyl steht, darüber hinaus auch für -OSiR²³R²⁴R, worin R die Fortsetzung der Siloxankette analog Formel (II) in der Verzweigung symbolisiert, so dass das Polymermolekül Verzweigungseinheiten der Formel SeiO_{4/2} und R²³SiO_{3/2}
aufweisen kann, wobei R²³ in mindestens 4 dieser Silyldioxyleinheiten für Wasserstoff steht, so dass ein Molekül über mindestens 4 Vernetzungsstellen verfügt,
R²⁴ jeweils ausdrücklich auch in jeder Wiederholungseinheit unabhängig voneinander für C₁-C₁₂-Alkyl, C₁-C₁₂-Fluoralkyl und gegebenenfalls substituiertes Phenyl oder Naphthyl steht, darüber hinaus auch für -OSiR²³R²⁴R, worin R die Fortsetzung der Siloxankette analog Formel (II) in der Verzweigung symbolisiert, so dass das Polymermolekül Verzweigungseinheiten der Formel SiO_{4/2} und R²³SiO_{3/2} aufweisen kann,
x für eine ganze Zahl von 4 bis 10000 steht und so variiert wird, dass die Viskosität des Polymeren von 0,0005 bis 0,1 Pas bei 25 °C reicht,
J) mindestens ein Katalysator enthaltend ein Element der Platingruppe, wobei maximal 3 Gewichtsteile Metallverbindungen, wie Oxide und/oder Carbonate sowie weiterer Salze und Komplexverbindungen des Fe, AI, Zn, Ti, Zr, Ce oder anderer Lanthanoide bezogen auf 100 Gewichtsteile der Komponente A) vorhanden sind,
K) mindestens eine Suspension, wobei das Suspensionsmedium Polysiloxane der Formel (I) und/oder (II) und/oder nicht funktionelle Siloxane G) sind und mindestens ein Antiseptikum ausgewählt aus der Gruppe bestehend aus Chlorhexidin, Octenidin, PHMB, Quats und Taurolidin enthält.

2. Silikonkautschukformulierung gemäß Anspruch 1, worin
- das Polysiloxan A) ein Polysiloxan der Formel (I) ist
R¹R²₂SiO-(SiR³R⁴O-)ₓSiR¹R²₂ (I),
worin die Reste
R¹ und R² jeweils gleich oder verschieden sein können, und jeweils für C₁-C₁₂-Alkyl, C₁-C₁₂-Fluoralkyl, und gegebenenfalls substituiertes Phenyl oder Naphthyl stehen,
R³ und R⁴ jeweils gleich oder verschieden sein können, ausdrücklich auch in jeder Wiederholungseinheit, und jeweils für C₁-C₁₂-Alkyl, C₁-C₁₂-Fluoralkyl und gegebenenfalls substituiertes Phenyl oder Naphthyl stehen,
R¹ und R³ darüber hinaus unabhängig voneinander auch für C₁-C₁₂-Alkenyl stehen, wobei das Polymer 0,0002 bis 3 Gew.-% Vinylgruppen enthält und das Molekül über mindestens zwei olefinisch ungesättigte Mehrfachbindungen verfügt,
x für eine ganze Zahl von 2 bis 15000 steht und so variiert wird, dass die Viskosität des Polymeren von 0,1 bis 1.000 Pas bei 25 °C reicht,
- ein Füllstoff B) mit einer spezifischen Oberfläche zwischen 50 und 400 m²/g nach BET eingesetzt wird,
- das Polyhydrogensiloxan I) der Formel (II) entspricht
**R²¹R²²₂SiO-(SiR²³R²⁴O-)ₓSiR²¹R²²₂** **(II),**
worin die Substituenten
R²¹ und R²² jeweils gleich oder verschieden sein können, und jeweils für C₁-C₁₂-Alkyl , C₁-C₁₂-Fluoralkyl, und gegebenenfalls substituiertes Phenyl oder Naphthyl stehen,
R²³ jeweils ausdrücklich auch in jeder Wiederholungseinheit unabhängig voneinander für Wasserstoff, C₁-C₁₂-Alkyl, C₁-C₁₂-Fluoralkyl und gegebenenfalls substituiertes Phenyl oder Naphthyl steht, wobei R²³ in mindestens 4 dieser Silyldioxyleinheiten für Wasserstoff steht, so dass ein Molekül über mindestens 4 Vernetzungsstellen verfügt,
R²⁴ jeweils ausdrücklich auch in jeder Wiederholungseinheit unabhängig voneinander für C₁-C₁₂-Alkyl, C₁-C₁₂-Fluoralkyl und gegebenenfalls substituiertes Phenyl oder Naphthyl steht,
x für eine ganze Zahl von 4 bis 10000 steht und so variiert wird, dass die Viskosität des Polymeren von 0,0005 bis 0,1 Pas bei 25 °C reicht,
- der Katalysator aus der Platingruppe J) ein Katalysator ist, der die Hydrosilylierungsreaktion katalysiert und ausgewählt wird aus Metallen der Platingruppe, wie Pt, Ni und Verbindungen von Metallen der Platingruppe, wie Salze oder Komplexverbindungen davon,
- für die Suspension K), mindestens ein Polysiloxan der Formel (I) gemäß A) als Suspensionsmedium verwendet wird, worin die Substituenten R¹ bis R⁴ jeweils Methyl- und Vinylreste sind, so dass das Polymer 0,0002 bis 3 Gew.-% Vinylgruppen enthält, und das Molekül über mindestens zwei olefinisch ungesättigte Mehrfachbindungen verfügt, und x so variiert, dass die Viskosität des Polymeren von 0,1 bis 1.000 Pas bei 25°C reicht,
und die Suspension K) mindestens ein Antiseptikum ausgewählt aus der Gruppe bestehend aus Chlorhexidin, Octenidin, PHMB, Quats und Taurolidin, enthält, welches jeweils in einer mittleren Teilchengröße d₅₀ von 0,5 bis 15 µm, bevorzugt zwischen 1 und 10 µm und einer Teilchengrößenverteilung zwischen 0,1 bis 30 µm, bevorzugt 0,5 bis 20 µm enthält.

3. Verfahren zur Herstellung der Silikonkautschukformulierung gemäß Anspruch 1 oder 2, **dadurch gekennzeichnet ist, dass** zunächst die in Anspruch 1 oder 2 definierten Komponenten A) bis J) zusammengegeben und vermischt werden und dann die in Anspruch 1 oder 2 definierte Suspension K) anschließend zugegeben und eingearbeitet wird.

4. Silikonelastomere, hergestellt durch Polymerisation einer Silikonkautschukformulierung gemäß Anspruch 1 oder 2.

5. Verfahren zur Herstellung von Silikonelastomere gemäß Anspruch 4 umfassend die Bereitstellung einer Silikonkautschukformulierung gemäß Anspruch 1 oder 2 und die Polymerisation der besagten Silikonkautschukformulierung.

6. Formkörper, hergestellt durch Vernetzung einer Silikonkautschukformulierungen gemäß Anspruch 1 oder 2.

7. Verwendung der Silikonelastomere gemäß Anspruch 4 zur Herstellung von einem medizinischen Artikel.

8. Verwendung der Silikonelastomere gemäß Anspruch 4 zur Herstellung von einem Katheter.

9. Katheter enthaltend ein Silikonelastomer gemäß Anspruch 4.

## Claims

1. Silicone rubber formulation containing
A) at least one polysiloxane of formula (I)
**R¹R²₂SiO-(SiR³R⁴O-)ₓSiR¹R²₂** **(I),**
wherein the functional groups
R¹ and R² may in each case be identical or different and in each case represent C₁-C₁₂-alkyl, C₁-C₁₂-fluoroalkyl, and optionally substituted phenyl or naphthyl,
R³ and R⁴ may in each case be identical or different, expressly also in each repeating unit, and in each case represent C₁-C₁₂-alkyl, C₁-C₁₂-fluoroalkyl, and optionally substituted phenyl or naphthyl; additionally also -OSiR²R³R, wherein R symbolises the continuation of the siloxane chain analogously to formula (I) in the branching, so that the polymer molecule may have branching units of the formula SiO_{4/2} and R³SiO_{3/2},
R¹ and R³ independently of one another additionally also represent C₁-C₁₂-alkenyl, wherein the polymer contains from 0.0002 to 3% by weight of vinyl groups and the molecule has at least two olefinically unsaturated multiple bonds,
x represents an integer from 2 to 15,000 and is varied so that the viscosity of the polymer ranges from 0.1 to 1000 Pas at 25°C,
I) at least one polyhydrosiloxane of formula (II)
**R²¹R²₂SiO-(SiR²³R²⁴O-)ₓSiR²¹R²²₂** **(II),**
wherein the substituents
R²¹ and R²² may in each case be identical or different and in each case represent C₁-C₁₂-alkyl, C₁-C₁₂-fluoroalkyl, and optionally substituted phenyl or naphthyl,
R²³ in each case, expressly also in each repeating unit, independently of one another represents hydrogen, C₁-C₁₂-alkyl, C₁-C₁₂-fluoroalkyl, and optionally substituted phenyl or naphthyl; additionally also -OSiR²³R²⁴R, wherein R symbolises the continuation of the siloxane chain analogously to formula (II) in the branching, so that the polymer molecule may have branching units of the formula SiO_{4/2} and R²³SiO_{3/2}, wherein R²³ in at least 4 of these silyldioxyl units represents hydrogen, so that a molecule has at least 4 cross-linking sites,
R²⁴ in each case, expressly also in each repeating unit, independently of one another represents C₁-C₁₂-alkyl, C₁-C₁₂-fluoroalkyl, and optionally substituted phenyl or naphthyl; additionally also -OSiR²³R²⁴R, wherein R symbolises the continuation of the siloxane chain analogously to formula (II) in the branching, so that the polymer molecule may have branching units of the formula SiO_{4/2} and R²³SiO_{3/2},
x represents an integer from 4 to 10,000 and is varied so that the viscosity of the polymer ranges from 0.0005 to 0.1 Pas at 25°C,
J) at least one catalyst containing an element of the platinum group, wherein not more than 3 parts by weight of metal compounds, such as oxides and/or carbonates as well as further salts and complex compounds of Fe, Al, Zn, Ti, Zr, Ce or other lanthanoids, based on 100 parts by weight of component A), are present,
K) at least one suspension, wherein the suspending medium contains polysiloxanes of formula (I) and/or (II) and/or non-functional siloxanes G) and contains at least one antiseptic selected from the group consisting of chlorhexidine, octenidine, PHMB, quats and taurolidine.

2. Silicone rubber formulation according to claim 1, wherein
- the polysiloxane A) is a polysiloxane of formula (I)
**R¹R²₂SiO-(SiR³R⁴O-)ₓSiR¹R²₂** **(I),**
wherein the functional groups
R¹ and R² may in each case be identical or different and in each case represent C₁-C₁₂-alkyl, C₁-C₁₂-fluoroalkyl, and optionally substituted phenyl or naphthyl,
R³ and R⁴ may in each case be identical or different, expressly also in each repeating unit, and in each case represent C₁-C₁₂-alkyl, C₁-C₁₂-fluoroalkyl, and optionally substituted phenyl or naphthyl;
R¹ and R³ independently of one another additionally also represent C₁-C₁₂-alkenyl, wherein the polymer contains from 0.0002 to 3% by weight of vinyl groups and the molecule has at least two olefinically unsaturated multiple bonds,
x represents an integer from 2 to 15,000 and is varied so that the viscosity of the polymer ranges from 0.1 to 1000 Pas at 25°C,
- a filler B) having a BET specific surface area of from 50 to 400 m²/g is used,
- the polyhydrosiloxane I) corresponds to formula (II)
**R²¹R²²₂SiO-(SiR²³R²⁴O-)ₓSiR²¹R²²₂** **(II),**
wherein the substituents
R²¹ and R²² may in each case be identical or different and in each case represent C₁-C₁₂-alkyl, C₁-C₁₂-fluoroalkyl, and optionally substituted phenyl or naphthyl,
R²³ in each case, expressly also in each repeating unit, independently of one another represents hydrogen, C₁-C₁₂-alkyl, C₁-C₁₂-fluoroalkyl, and optionally substituted phenyl or naphthyl, wherein R²³ in at least 4 of these silyldioxyl units represents hydrogen, so that a molecule has at least 4 cross-linking sites,
R²⁴ in each case expressly also in each repeating unit independently of one another represents C₁-C₁₂-alkyl, C₁-C₁₂-fluoroalkyl, and optionally substituted phenyl or naphthyl,
x represents an integer from 4 to 10,000 and is varied so that the viscosity of the polymer ranges from 0.0005 to 0.1 Pas at 25°C,
- the catalyst from the platinum group J) is a catalyst which catalyses the hydrosilylation reaction and is selected from metals of the platinum group, such as Pt, Ni and compounds of metals of the platinum group, such as salts or complex compounds thereof,
- the suspending medium used for the suspension K) is at least one polysiloxane of formula (I) according to A), wherein the substituents R¹ to R⁴ are each methyl and vinyl functional groups, so that the polymer contains from 0.0002 to 3% by weight vinyl groups and the molecule has at least two olefinically unsaturated multiple bonds, and x is varied so that the viscosity of the polymer ranges from 0.1 to 1000 Pas at 25°C,
and the suspension K) contains at least one antiseptic selected from the group consisting of chlorhexidine, octenidine, PHMB, quats and taurolidine, in each case in an average particle size d₅₀ of from 0.5 to 15 µm, preferably from 1 to 10 µm, and a particle size distribution of from 0.1 to 30 µm, preferably from 0.5 to 20 µm.

3. Process for preparing the silicone rubber formulation according to either claim 1 or claim 2, **characterised in that** components A) to J) defined in either claim 1 or claim 2 are first combined and mixed, and then the suspension K) defined in either claim 1 or claim 2 is added and incorporated.

4. Silicone elastomers produced by polymerisation of a silicone rubber formulation according to either claim 1 or claim 2.

5. Process for producing silicone elastomers according to claim 4, comprising providing a silicone rubber formulation according to either claim 1 or claim 2 and polymerising said silicone rubber formulation.

6. Moulded body produced by cross-linking a silicone rubber formulation according to either claim 1 or claim 2.

7. Use of the silicone elastomers according to claim 4 for the production of a medical article.

8. Use of the silicone elastomers according to claim 4 for producing a catheter.

9. Catheter containing a silicone elastomer according to claim 4.

## Revendications

1. Formulation de caoutchouc de silicone contenant
A) au moins un polysiloxane de la formule (I),
R¹R²₂SiO-(SiR³R⁴O**-)ₓSiR¹R²₂** **(I),**
dans laquelle les radicaux
R¹ et R² peuvent être respectivement identiques ou différents, et représentent respectivement un alkyle en C₁-C₁₂, un fluoroalkyle en C₁-C₁₂, et éventuellement un phényle ou un naphtyle substitué,
R³ et R⁴ peuvent être respectivement identiques ou différents, expressément également dans chaque motif de répétition, et représentent respectivement un alkyle en C₁-C₁₂, un fluoroalkyle en C₁-C₁₂, et éventuellement un phényle ou un naphtyle substitué, par ailleurs également -OSiR²R³R, dans laquelle R symbolise le prolongement de la chaîne siloxane par analogie avec la formule (I) dans la ramification de sorte que la molécule polymère peut présenter des motifs de ramification de la formule SiO_{4/2} et R³SiO_{3/2},
R¹ et R³ représentent par ailleurs indépendamment l'un de l'autre également un alcényle en C₁-C₁₂, dans laquelle le polymère contient 0,0002 à 3 % en poids de groupes vinyle et la molécule dispose d'au moins deux liaisons multiples à insaturation oléfinique,
x représente un nombre entier allant de 2 à 15 000 et varie de telle manière que la viscosité du polymère atteint 0,1 à 1 000 Pas à une température de 25 °C,
I) au moins un polyhydrogénosiloxane de la formule (II)
**R²¹R²²₂SiO-(SiR²³R²⁴O-)ₓSiR²¹R²²₂** **(II),**
dans laquelle les substituants
R²¹ et R²² peuvent être respectivement identiques ou différents et représentent respectivement un alkyle en C₁-C₁₂, un fluoroalkyle en C₁-C₁₂ et éventuellement un phényle ou naphtyle substitué,
R²³ représente respectivement expressément également dans chaque motif de répétition indépendamment l'un de l'autre de l'hydrogène, un alkyle en C₁-C₁₂, un fluoroalkyle en C₁-C₁₂ et éventuellement un phényle ou naphtyle substitué, par ailleurs également -OSiR²³R²⁴R, dans laquelle R symbolise le prolongement de la chaîne siloxane par analogie avec la formule (II) dans la ramification de sorte que la molécule polymère peut présenter des motifs de ramification de la formule SiO_{4/2} et R²³SiO_{3/2}, dans laquelle R²³ représente dans au moins 4 desdits motifs de dioxyle silyle de l'hydrogène de sorte qu'une molécule dispose d'au moins 4 emplacements de réticulation,
R²⁴ représente, respectivement expressément également dans chaque motif de répétition indépendamment les uns des autres, un alkyle en C₁-C₁₂, un fluoroalkyle en C₁-C₁₂ et éventuellement un phényle ou naphtyle substitué, par ailleurs également -OSiR²³R²⁴R, dans laquelle R symbolise le prolongement de la chaîne siloxane par analogie avec la formule (II) dans la ramification de sorte que la molécule polymère peut présenter des motifs de ramification de la formule SiO_{4/2} et R²³SiO_{3/2},
x représente un nombre entier allant de 4 à 10 000 et varie de telle sorte que la viscosité du polymère atteint de 0,0005 à 0,1 Pas à une température de 25 °C,
J) au moins un catalyseur contenant un élément du groupe du platine, dans laquelle sont présentes au maximum 3 parties en poids de composés de métal, tels que des oxydes et/ou des carbonates ainsi que d'autres sels et composés complexes du Fe, Al, Zn, Ti, Zr, Ce ou d'autres lanthanides par rapport à 100 parties en poids du composant A),
K) au moins une suspension, dans laquelle le milieu de suspension est des polysiloxanes de la formule (I) et/ou (II) et/ou n'est pas des siloxanes G) fonctionnels et contient au moins un antiseptique choisi parmi le groupe constitué de la chlorhexidine, de l'octénidine, du PHMB, des quats, et de la taurolidine.

2. Formulation de caoutchouc de silicone selon la revendication 1, dans laquelle
- le polysiloxane A) est un polysiloxane de la formule (I)
**R¹R²₂SiO)-(SiR³R⁴O-)ₓSiR¹R²₂** **(I),**
dans laquelle les radicaux
R¹ et R² peuvent être respectivement identiques ou différents, et représentent respectivement un alkyle en C₁-C₁₂, un fluoroalkyle en C₁-C₁₂, et éventuellement un phényle ou un naphtyle substitué,
R³ et R⁴ peuvent être respectivement identiques ou différents, expressément également dans chaque motif de répétition, et représentent respectivement un alkyle en C₁-C₁₂, un fluoroalkyle en C₁-C₁₂, et éventuellement un phényle ou un naphtyle substitué,
R¹ et R³ représentent par ailleurs indépendamment l'un de l'autre également un alcényle en C₁-C₁₂, dans laquelle le polymère contient 0,0002 à 3 % en poids de groupes vinyle et la molécule dispose d'au moins deux liaisons multiples à insaturation oléfinique,
x représente un nombre entier allant de 2 à 15 000 et varie de telle sorte que la viscosité du polymère atteint 0,1 à 1 000 Pas à une température de 25 °C,
- une charge B) est employée avec une surface spécifique comprise entre 50 et 400 m²/g selon BET
- le polyhydrogénosiloxane I) correspond à la formule (II)
**R²¹R²²₂SiO-(SiR²³R²⁴O-)ₓSiR²¹R**²²₂ **(II),**
dans laquelle les substituants
R²¹ et R²² peuvent être respectivement identiques ou différents et représentent respectivement un alkyle en C₁-C₁₂, un fluoroalkyle en C₁-C₁₂ et éventuellement un phényle ou naphtyle substitué,
R²³ représente respectivement expressément également dans chaque motif de répétition indépendamment les uns des autres de l'hydrogène, un alkyle en C₁-C₁₂, un fluoroalkyle en C₁-C₁₂ et éventuellement un phényle ou naphtyle substitué, dans laquelle R²³ représente dans au moins 4 desdits motifs de dioxyle silyle de l'hydrogène de sorte qu'une molécule dispose d'au moins 4 emplacements de réticulation,
R²⁴ représente, respectivement expressément également dans chaque motif de répétition indépendamment les uns des autres, un alkyle en C₁-C₁₂, un fluoroalkyle en C₁-C₁₂ et éventuellement un phényle ou naphtyle substitué,
x représente un nombre entier allant de 4 à 10 000 et varie de telle sorte que la viscosité du polymère atteint de 0,0005 à 0,1 Pas à une température de 25 °C,
- le catalyseur issu du groupe du platine J) est un catalyseur, qui catalyse la réaction d'hydrosilylation et est choisi parmi des métaux du groupe du platine, tels que Pt, Ni et des composés de métaux du groupe du platine, tels que des sels ou des composés complexes de ces derniers,
- pour la suspension K), au moins un polysiloxane de la formule (I) est utilisé selon A) en tant que milieu de suspension, dans lequel les substituants R¹ à R⁴ sont respectivement des radicaux de méthyle et de vinyle si bien que le polymère contient 0,0002 à 3 % en poids de groupes vinyle et que la molécule dispose d'au moins deux composés multiples à insaturation oléfinique, et x varie de telle sorte que la viscosité du polymère atteint 0,1 à 1 000 Pas à une température de 25 °C,
et la suspension K) contient au moins un antiseptique choisi parmi le groupe constitué de chlorhexidine, de octénidine, de PHMB, de quats, et de taurolidine, lequel contient respectivement une granulométrie moyenne d₅₀ allant de 0,5 à 15 µm, de manière préférée comprise entre 1 et 10 µm et une répartition granulométrique comprise entre 0,1 et 30 µm, de manière préférée de 0,5 à 20 µm.

3. Procédé servant à fabriquer la formulation de caoutchouc de silicone selon la revendication 1 ou 2, **caractérisé en ce que** dans un premier temps les composants A) à J) définis dans la revendication 1 ou 2 sont combinés et mélangés, puis la suspension K) définie dans la revendication 1 ou 2 est ensuite additionnée et intégrée.

4. Elastomères de silicone fabriqués par polymérisation d'une formulation de caoutchouc de silicone selon la revendication 1 ou 2.

5. Procédé servant à fabriquer des élastomères de silicone selon la revendication 4 comprenant la mise à disposition d'une formulation de caoutchouc de silicone selon la revendication 1 ou 2 et la polymérisation de ladite formulation de caoutchouc de silicone.

6. Corps moulé fabriqué par la réticulation d'une formulation de caoutchouc de silicone selon la revendication 1 ou 2.

7. Utilisation des élastomères de silicone selon la revendication 4 afin de fabriquer un article médical.

8. Utilisation des élastomères de silicone selon la revendication 4 afin de fabriquer un cathéter.

9. Cathéter contenant un élastomère de silicone selon la revendication 4.
